# FASCICULE DE BREVET EUROPEEN

(11) **EP 4 182 988 B1**
(45) Date de publication et mention de la délivrance du brevet: **29.05.2024**
(21) Numéro de dépôt: 21740618.0
(22) Date de dépôt: 13.07.2021
(51) Int. Cl.: H01M 10/04, H01M 4/139, H01M 10/0565, H01M 10/0566, H01M 10/0585, H01M 4/131, H01M 4/136, H01M 10/052

(54) **PROCÉDÉ ET ÉQUIPEMENT DE FABRICATION D'UNE CELLULE DE BATTERIE**
VERFAHREN UND VORRICHTUNG ZUR HERSTELLUNG EINER BATTERIEZELLE
METHOD AND APPARATUS FOR MANUFACTURING A BATTERY CELL

(30) Priorité: 15.07.2020 FR 2007389; 22.09.2020 FR 2009586
(43) Date de publication de la demande: 24.05.2023
(73) Titulaire: PELLENC ENERGY, 84120 Pertuis (FR)
(72) Inventeur: PELLENC, Roger, 84120 Pertuis (FR)
(74) Mandataire: Hautier IP
(86) Numéro de dépôt international: PCT/IB2021/056298
(87) Numéro de publication internationale: WO 2022/013741

(56) Documents cités:
- EP-A1- 2 690 686
- US-A1- 2003 054 256
- VIJAYAKUMAR VIDYANAND ET AL: "An all-solid-state-supercapacitor possessing a non-aqueous gel polymer electrolyte prepared using a UV-assisted in situ polymerization strategy", JOURNAL OF MATERIALS CHEMISTRY A, vol. 5, no. 18, 4 avril 2017 (2017-04-04), pages 8461-8476, XP055785841, GB ISSN: 2050-7488, DOI: 10.1039/C7TA01514C

## Description

### Domaine technique

La présente invention concerne un procédé et un équipement de fabrication d'une cellule de batterie, et, par extension, de batteries électriques composées de plusieurs cellules.

Chaque cellule de batterie électrique, ou batterie, constitue un accumulateur d'énergie électrique. Une batterie peut être formée par la mise en parallèle et/ou la mise en série de cellules de batterie. Chaque cellule comprend une électrode positive, associée à un collecteur de courant, et une électrode négative associée à un autre collecteur de courant. Les électrodes positive et négative sont encore désignées par « cathode » et « anode ». Les collecteurs de courant constituent les bornes électriques des cellules.

Les électrodes comprennent chacune un matériau d'électrode dit « actif », capable d'interagir avec, et retenir, un type d'ion donné, un percolant électronique ou additif conducteur électronique tel que du noir de carbone assurant le passage des électrons du collecteur de courant vers le matériau actif de l'électrode associée, et, généralement, un liant permettant la tenue mécanique des électrodes et l'adhésion des matériaux sur le collecteur de courant.

L'invention concerne en particulier des cellules du type lithium-ion, sodium-ion, ou lithium-soufre.

Il s'agit notamment de cellules associant des matériaux de cathode lithiés tels que le NMC (Nickel Manganèse Cobalt), le NCA (Nickel, Cobalt, Aluminium) ou le Li2S (sulfure de Lithium), et des matériaux d'anode à base de carbone, de silicium, de silicium associé à du carbone, de métaux de transition ou d'alliages de métaux de transition ou de matériaux composites alliant des métaux de transition et du carbone.

Plus généralement, l'invention concerne encore les cellules de type lithium métal, sodium métal, aluminium métal et magnésium métal, et un équipement pour leur fabrication.

L'invention trouve des applications pour la fabrication de cellules de batterie minces, à électrolyte solide obtenu par solidification d'un électrolyte liquide, présentant une surface importante. Elle convient en particulier à la fabrication en continu d'une cellule de largeur fixe et de très grande longueur, selon un procédé en continu de type rouleau à rouleau (roll to roll). Les cellules, fabriquées conformément à l'invention peuvent être découpées, associées en série, par exemple par empilement, et/ou en parallèle. De manière non limitative, l'invention trouve donc également des applications dans la fabrication de batteries électriques utilisables pour des véhicules électriques, des outils électriques, des équipements de communication portables, des drones ou encore des installations stationnaires de stockage d'énergie électrique.

L'équipement de l'invention peut également être mis en oeuvre pour la fabrication de cellules de supercondensateur à électrolyte solide obtenu par solidification d'un électrolyte liquide.

### Etat de la technique antérieure

On connait des cellules de batterie à électrolyte liquide.

Dans ces cellules, un électrolyte liquide assure une conduction ionique entre l'électrode d'anode et l'électrode de cathode ainsi qu'au sein de chacune de ces électrodes. Un film séparateur isolant électrique est disposé entre l'électrode d'anode et l'électrode de cathode. Il permet d'éviter un contact électrique direct entre cathode et anode tout en autorisant la circulation des ions.

Les cellules de batterie à électrolyte liquide sont pourvues d'une enceinte étanche formant un réservoir capable de contenir l'électrolyte. Ainsi, une difficulté dans la fabrication de ces cellules tient à la réalisation d'une enceinte étanche et son scellement.

Une autre difficulté tient au remplissage des cellules avec un électrolyte liquide, qui s'avère être un produit dangereux, inflammable et polluant.

D'autres problèmes se posent avec les cellules à électrolyte liquide avec, outre un risque de fuite, un risque d'inflammation de l'électrolyte liquide lorsque la température de la cellule s'élève.

Enfin, les électrolytes liquides utilisés dans les cellules s'avèrent en général être nocifs pour la santé, des vapeurs d'électrolyte étant susceptibles d'affecter les voies respiratoires. La toxicité des électrolytes constitue un inconvénient au moment de la fabrication des cellules mais aussi au moment de leur recyclage.

On connait également des cellules de batteries à électrolyte solide, et plus précisément à électrolyte solidifié, qui joue le même rôle que l'électrolyte liquide des cellules de batterie à électrolyte liquide.

La fabrication de ce type de cellules comprend typiquement la préparation d'une électrode positive sur un substrat collecteur de courant, la préparation d'une électrode négative sur un autre substrat collecteur de courant et la préparation d'une couche de séparation formée d'un électrolyte solide, puis l'assemblage de ces couches en une cellule de batterie. La préparation des différents composants, et en particulier la préparation de la couche d'électrolyte solide (gel ou polymère) peut avoir lieu par réticulation ou par polymérisation d'un électrolyte initialement liquide, sous l'effet d'un rayonnement ultraviolet (US 2003/054256 A1, EP 2 690 686 A1).

De manière similaire, les électrodes positive et négative peuvent être obtenues soit par séchage d'un solvant d'une encre d'électrode, soit par réticulation d'un polymère sous rayonnement ultraviolet ou encore par chauffage.

A titre d'illustration de ce type de cellule de batterie, on peut se reporter, par exemple, au document EP 3 341 987.

Le document US2006/0016549 décrit un procédé et un équipement pour la stratification d'une feuille d'électrode sur un film de support, conducteur électrique, susceptible de former un collecteur de courant. La stratification a lieu au moyen d'un chauffage du film de support, et éventuellement de la feuille d'électrode de manière à les ramollir. Après chauffage, la feuille d'électrode et le film de support sont assemblés par passage entre des rouleaux presseurs.

Le document US2005/0236732 décrit un procédé et un équipement pour l'extrusion d'un film composite formant une électrode positive, et le calandrage du film pour aboutir à une épaisseur souhaitée. Le film composite comprend un mélange de matière active d'électrode, d'un additif conducteur électronique et d'un électrolyte polymère conducteur ionique. Dans les cellules de batteries à électrolyte solide, la couche d'électrolyte solide, qui sépare les électrodes positive et négative, a une double fonction. La fonction principale est d'assurer une conduction ionique entre les électrodes de signe opposé, pendant la charge ou la décharge de la cellule de batterie. Une autre fonction est de maintenir à distance les électrodes de signes opposés et d'éviter ainsi une conduction électronique entre les électrodes qui aurait pour conséquence la mise en court-circuit de la cellule. Cette deuxième fonction, d'isolation électrique, s'apparente à celle du film séparateur électrique des cellules à électrolyte liquide, la couche d'électrolyte étant imperméable aux électrons.

Cependant, toute batterie présente une résistance interne qu'il est souhaitable de réduire afin d'augmenter son rendement.

En outre, il est également souhaitable de réduire le coût de fabrication des batteries, tout en maintenant ou en augmentant leur niveau de fiabilité et de sûreté d'utilisation.

### Exposé de l'invention

L'invention a pour objectif de réduire la résistance interne des batteries à électrolyte solide ainsi que de fournir un procédé économique de fabrication de batteries à électrolyte solide à résistance interne réduite par rapport aux batteries conventionnelles de même type.

Ainsi, l'invention porte sur un procédé de fabrication d'une cellule de stockage d'énergie sous forme électrochimique, comprenant les étapes de former une première demi-cellule, comprenant les étapes a1), a2), a3) suivantes : a1) fournir un premier support conducteur électrique ; a2) déposer, sur une face du premier support conducteur électrique, une couche de cathode dans un état pâteux, comprenant une matière active de cathode, des charges conductrices électriques carbonées, un premier mélange électrolyte liquide conducteur d'ions, un premier mélange monomère ou polymère et un premier amorceur de polymérisation ou de réticulation du premier mélange monomère ou polymère ; a3) exposer la couche de cathode dans un état pâteux au moyen d'un premier rayonnement adapté au premier amorceur de polymérisation ou de réticulation du premier mélange monomère, de manière à amorcer une solidification de la couche de cathode; former une deuxième demi-cellule, comprenant les étapes b1), b2), b3) suivante : b1) fournir un deuxième support conducteur électrique ; b2) déposer, sur une face du deuxième support conducteur électrique, une couche d'anode dans un état pâteux, comprenant une matière active d'anode, des charges conductrices électriques carbonées, un deuxième mélange électrolyte liquide conducteur d'ions, un deuxième mélange monomère ou polymère et un deuxième amorceur de polymérisation ou de réticulation du deuxième mélange monomère ou polymère ; b3) exposer la couche d'anode dans un état pâteux au moyen d'un deuxième rayonnement adapté au deuxième amorceur de polymérisation ou de réticulation du deuxième mélange monomère, de manière à amorcer une solidification de la couche d'anode ; mettre en oeuvre au moins l'une des étapes a4), b4 et c4) suivantes : a4) déposer et exposer, sur la couche de cathode exposée avant achèvement de la solidification de la première couche d'électrode exposée, une première couche de séparation formée d'un premier mélange de séparation dans un état liquide, comprenant un premier mélange électrolyte liquide de séparation conducteur d'ions, un premier mélange monomère ou polymère de séparation et un premier amorceur de polymérisation ou de réticulation du premier mélange monomère ou polymère de séparation ; b4) déposer et exposer, sur la couche d'anode exposée avant achèvement de la solidification de la couche d'anode exposée, une deuxième couche de séparation formée d'un deuxième mélange de séparation dans un état liquide, comprenant un deuxième mélange électrolyte liquide de séparation conducteur d'ions, un deuxième mélange monomère ou polymère de séparation et un deuxième amorceur de polymérisation ou de réticulation du deuxième mélange monomère ou polymère de séparation ; c4) déposer et exposer, sur un film grillagé isolant électrique, une troisième couche de séparation formée d'un troisième mélange de séparation dans un état liquide, comprenant un troisième mélange électrolyte liquide de séparation conducteur d'ions, un troisième mélange monomère ou polymère de séparation et un troisième amorceur de polymérisation ou de réticulation du troisième mélange monomère ou polymère de séparation ; les expositions des étapes a4), b4), et c4) étant mises en oeuvre au moyen de troisième rayonnements, adaptés aux amorceurs de polymérisation ou de réticulation des mélanges monomère ou polymère de séparation respectifs et adaptés à amorcer une solidification des première, deuxième et troisième couches de séparation ; assembler la première demi-cellule et la deuxième demi-cellule en interposant entre les deux demi-cellules, au moins l'une des couches de séparations des étapes a4), b4) et c4), l'assemblage comprenant l'une des étapes d1), d2), d3) et d4) suivantes : d1) mettre en contact direct la première couche de séparation exposée avec la deuxième couche de séparation exposée; d2) mettre en contact direct la première couche de séparation exposée avec la couche d'anode exposée; d3) mettre en contact direct la deuxième couche de séparation exposée avec la couche de cathode exposée; et d4) enserrer la troisième couche de séparation exposée entre la couche de cathode exposée et la couche d'anode exposée, dans lesquelles étapes d1), d2), d3) et d4), les solidifications respectives des couches mises en contact ne sont pas achevées.

Les inventeurs sont partis du constat d'une conduction ionique imparfaite entre des électrodes positive et négative à travers la couche de séparation formée d'un électrolyte solide séparant mécaniquement et électriquement les électrodes positive et négative l'une de l'autre, et désigné par la suite comme couche de séparation.

Les inventeurs ont également constaté une conduction ionique insuffisante entre les matières actives d'électrode, conventionnellement sous forme de feuille mises en contact avec un électrolyte

Aussi, l'invention a pour but de proposer un procédé de fabrication d'une cellule de batterie améliorant les propriétés de conduction ionique entre les électrodes et la couche de séparation, ainsi qu'à l'interface entre la matière active et l'électrolyte des couches d'électrodes, mais aussi à l'intérieur de la matière active et à l'intérieur de la couche de séparation.

L'invention a ainsi pour but d'obtenir une cellule de batterie solide ayant des performances de conduction ionique comparable à celles des cellules à électrolyte liquide.

L'invention vise ainsi à obtenir une cellule avec une couche de séparation comprenant un électrolyte solide, ayant une qualité de conduction électronique et ionique à l'intérieur des électrodes qui soit comparable à celle des cellules utilisant un électrolyte liquide.

L'invention vise également à améliorer la conduction ionique d'une électrode à l'électrode de signe opposé, à travers la couche de séparation, en évitant toute conduction électronique.

L'invention a pour but de proposer des cellules du type « tout solide » c'est-à-dire sans électrolyte liquide, dont la sécurité, notamment en termes d'étanchéité, de risques d'inflammation, et de risques pour la santé, est largement améliorée.

La sécurité des cellules s'entend au moment de leur fabrication, de leur utilisation, tout au long de leur vie, mais aussi en fin de vie pour leur recyclage.

L'invention a aussi pour but de proposer un procédé et un équipement de fabrication de cellules de batterie permettant la fabrication en continu et de manière automatique des cellules de batterie, en réduisant leur coût de fabrication.

L'invention a encore pour but de proposer un procédé de fabrication de cellules de batterie présentant une capacité massique améliorée, dans lesquelles les électrodes sont dépourvues de liant et en particulier de liant de type « pvdf » (fluorure de polyvinylidène).

L'invention a encore pour but de proposer un procédé de fabrication de batteries notamment par empilage de cellules à électrolyte solide ne nécessitant pas de liaisons de connexion en dehors des cellules.

Enfin, l'invention a pour but de proposer un équipement pour la fabrication d'une cellule de batterie à électrolyte solide.

### Description détaillée d'un mode particulier de réalisation de l'invention

L'invention met en oeuvre un procédé permettant d'assurer une excellente interface de contact entre une couche de cathode et une couche de séparation d'une part, une couche d'anode et la couche de séparation d'autre part, et éventuellement entre des sous-couches dont la combinaison forme la couche de séparation. En outre, une excellente conduction ionique est assurée dans les couches d'anode et de cathode, les matières actives de cathode et d'anode et les charges conductrices électriques carbonées présentant un excellent contact avec l'électrolyte des couches de cathode et d'anode. En effet, lors de la formation de ces couches d'électrode, le fait que la matière active et les charges conductrices électriques carbonées soient dispersées dans les mélanges électrolytes conducteurs d'ions à l'état liquide assure non seulement un contact intime, mais également de grandes surfaces de contact avec l'électrolyte, caractéristiques maintenues lors de la solidification des couches d'électrode.

Le procédé de l'invention peut être mis en oeuvre en formant une couche de séparation formée d'un électrolyte dépourvu de matière active soit sur la couche de cathode seulement, soit sur la couche d'anode seulement, soit sur la couche d'anode et sur la couche de cathode.

Afin de les distinguer, la couche de séparation, lorsqu'elle est déposée sur la couche de cathode est désignée par « première couche de séparation », et lorsqu'elle est déposée sur la couche d'anode, est désignée par « deuxième couche de séparation ».

Lorsque la première couche de séparation et la deuxième couche de séparation sont toutes deux présentes, l'assemblage de la première demi-cellule et de la deuxième demi-cellule a lieu par mise en contact intime de ces deux couches.

Lorsque seule la première couche de séparation est formée sur la couche de cathode de la première demi-cellule, l'assemblage des demi-cellules a lieu par la mise en contact de la première couche de séparation avec la couche d'anode de la deuxième demi-cellule.

Inversement, lorsque seule la deuxième couche de séparation est formée sur la couche d'anode de la deuxième demi-cellule, l'assemblage des demi-cellules a lieu par la mise en contact de la deuxième couche de séparation avec la couche de cathode de la première demi-cellule.

Dans tous les cas, les couches mises en contact pour l'assemblage des demi-cellules le sont avant achèvement de leur solidification, de manière à permettre une certaine interpénétration de la matière et un contact intime entre les couches, comme décrit encore plus loin.

Sauf précision contraire, la suite de la description se réfère à un mode de réalisation où chacune des demi-cellules comprend en surface une couche d'électrolyte dépourvu de matière active, ceci ne préjugeant pas de la possibilité de ne retenir que l'une de la première et de la deuxième couche d'électrolyte dépourvu de matière active.

En outre, la couche de séparation obtenue en fin du procédé de fabrication s'étendant de la couches de cathode à la couche d'anode et est imperméable aux électrons mais présente une conductivité ionique.

Le premier et le deuxième support forment, en raison de leur caractère conducteur électrique, les collecteurs de courant de la première et de la deuxième demi-cellule respectivement. Dans ce procédé, les étapes a2 et a3 visent à réaliser une électrode positive (cathode) sur le premier support conducteur électrique. Le premier support conducteur électrique a pour fonction de constituer un collecteur de courant de la cellule de batterie pour l'électrode positive. Il peut comporter une ou plusieurs couches de matières conductrices électriques. Ces matières conductrices peuvent être choisies parmi le métal, les polymères conducteurs, et les films de fibres de carbone tissés ou non-tissés. Parmi les métaux utilisables on peut citer le cuivre, l'aluminium, l'acier inoxydable et le nickel, par exemple. Il en va de même pour le deuxième support conducteur électrique qui sert de collecteur de courant pour une électrode négative (anode) réalisée lors des étapes b2 et b3. Le premier support conducteur et le deuxième support conducteur peuvent en particulier être fournis sous la forme de bandes déroulées à partir de rouleaux. Cet aspect est décrit plus en détail dans ce qui suit.

Toutefois une mise en oeuvre du procédé à partir d'un premier et d'un deuxième support conducteur sous forme de feuilles ou de plaques n'est pas exclu et peut constituer une alternative au procédé roll-to-roll décrit ci-dessous.

En référence aux opérations a1 et b1, la couche de cathode et la couche d'anode, contenant respectivement la matière active de cathode, pour la formation d'une électrode positive, et la matière active d'anode, pour la formation d'une électrode négative, sont déposées sur les supports conducteurs sous une forme pâteuse, comparable à une encre. Cette consistance est due au contenu en particules solides des couches de cathode et d'anode.

Ces couches sont constituées plus précisément de mélanges comprenant la matière active d'électrode (cathode ou anode, selon le cas), d'additifs conducteurs électriques carbonés tels que du noir de carbone, des nanotubes de carbone ou des nanofibres de carbone, du graphène, ou de l'oxyde de graphène et un liquide solidifiable ayant des propriétés de conduction ionique, tel qu'une mixture comprenant un mélange électrolyte liquide conducteur d'ions, un mélange monomère ou polymère et un premier amorceur de polymérisation ou de réticulation du premier mélange monomère ou polymère. Cette mixture peut être considérée comme un mélange électrolyte solidifiable ou plus simplement un électrolyte solidifiable. Ces mélanges, liquides, semi-liquides ou pâteux, pouvant être considérés génériquement comme liquides, permettent une excellente cohésion entre leurs constituants, résultant, après leur solidification par polymérisation ou réticulation du mélange monomère ou polymère, en des couches solides présentant d'excellentes caractéristiques de conduction ionique.

Il est possible d'utiliser des électrolytes liquides solidifiables de compositions différentes pour la couche de cathode, la couche d'anode, et les couches de séparation, en vue par exemple d'une optimisation des fonctionnements respectifs de chacune des couches.

Alternativement, le même électrolyte liquide solidifiable, à l'exception des additifs qu'il peut contenir, peut être utilisé pour toutes les opérations du procédé, de sorte que le même électrolyte liquide solidifiable est employé pour former la couche de cathode, la couche d'anode et la couche de séparation.

Utiliser le même électrolyte liquide solidifiable permet de favoriser la compatibilité et l'obtention d'une réticulation homogène entre les différentes couches mises en contact, facilitant les réglages du procédé de fabrication et réduisant les coûts de production.

Pour rester concis, sauf indication contraire, la suite de la description traite de ce dernier cas, et ce même électrolyte liquide solidifiable est désigné par « l'électrolyte liquide solidifiable».

Le premier mélange et le deuxième mélange peuvent être préparés dans des malaxeurs, et de préférence sous une atmosphère neutre, ce qui signifie que le ou les gaz constituant l'atmosphère neutre n'interagissent chimiquement pas avec les constituants des électrodes, et en particulier ne réagissent pas avec les matières actives de ces dernières.

Les additifs conducteurs électriques ont pour fonction d'améliorer la conduction des électrons dans les couches de cathode et d'anode. La proportion d'additifs conducteurs électriques peut être de préférence inférieure à 20% en masse de la couche de cathode ou d'anode considérée. Elle est par exemple comprise entre 5 et 20% lorsqu'il s'agit de noir de carbone, et comprise entre 1 et 5% lorsqu'il s'agit de nanotubes de carbones, de nanofibres de carbone ou de graphène.

La conduction ionique est assurée par l'électrolyte qui peut comporter des sels conducteurs d'ions.

Outre sa fonction de conduction ionique au coeur de la matière active, l'électrolyte, qui entre dans la composition des mélanges destinés à former la couche de cathode et la couche d'anode, intervient également dans l'accrochage de ces couches aux supports formant les collecteurs de courant. L'électrolyte encore liquide constitue, de par sa tension superficielle, un agent mouillant du premier support et du deuxième support et favorise ainsi l'adhésion des mélanges comprenant la matière active sur ces supports. Il en résulte, après la solidification, un excellent accrochage des couches d'anode et de cathode sur les collecteurs de courant.

Il convient de préciser que le terme « liquide » ne préjuge pas de la viscosité, et peut servir à désigner des couches pâteuses ou semi-liquides. En particulier les mélanges utilisés pour former les couches de cathode et d'anode peuvent présenter une consistance pâteuse due à leur contenu en éléments solides, tandis que l'électrolyte dépourvu de matière active et formant la couche de séparation peut être plus fluide car déposé avec une épaisseur plus faible. Le terme qualificatif « liquide » peut s'appliquer à chacune de ces couches.

Ainsi, l'épaisseur de la couche d'anode et l'épaisseur de la couche d'anode peuvent être comprises entre 50 µm et 300 µm et l'épaisseur de la couche de séparation peut être comprise entre 20 µm et 60 µm.

Les couches d'électrodes, cathode et anode, peuvent être constituées respectivement d'un premier mélange et d'un deuxième mélange, chacun comprenant 65 à 80% de matière active d'électrode destinée à stocker et relâcher des ions conducteurs lors des cycles de charge et de décharge de la batterie, 1 à 20% d'additifs conducteurs électriques carbonés destinés à améliorer la conductivité des électrons dans les couches, et 10 à 50% électrolyte liquide solidifiable, fournissant des ions mobiles et leur servant de support, les pourcentages exprimant des proportions en masse des couches d'électrode.

L'électrolyte liquide, qui est ici un électrolyte liquide solidifiable, peut être constitué d'un mélange comprenant 10 à 30% de sels de lithium, 50 à 75% de solvant tel qu'un solvant carbonate ou un solvant éther dans lequel sont dissous les ions, 10 à 30% d'un monomère et 0,1 à 5% d'un photoamorceur destiné à réticuler ou polymériser le monomère de manière à solidifier les couches d'électrode, les pourcentages représentant des proportions en masse de l'électrolyte liquide solidifiable.

Plus généralement, dans cette description, les sels de lithium pourraient être remplacés de manière générique par des sels alcalins d'électrolyte de batterie, qui comprennent en particulier les sels de lithium et les sels de sodium.

Un monomère peut optionnellement être remplacé par un mélange monomère constitué de plusieurs monomères distincts, afin par exemple d'obtenir une viscosité plus adaptée au procédé de fabrication envisagé.

L'électrolyte liquide solidifiable qui entre dans la composition du premier mélange et du deuxième mélange formant les couches de cathode et d'anode peut comprendre, par exemple, un électrolyte gel/polymère avec un sel de lithium type LiTFSI (Bis(trifluoromethane) sulfonimide de lithium), par exemple le lithium bis(trifluoromethanesulfonyl)im ide : N-butyl-N-methylpyrrolidiniumbis(fluorosulfonyl)imide commercialisé par la société Solvionic, ou un électrolyte liquide standard avec des carbonates (1M LiPF6 EC/DMC ou EC/DEC).

D'autres combinaisons utilisant, par exemple, un sel de lithium combiné avec des solvants carbonates, ou des éthers, ou des liquides ioniques, ou des polymères conducteurs d'ions ou des verres et céramiques conducteurs d'ions, ne sont pas exclues.

Le monomère peut être, par exemple, le trimethylolpropane ethoxylate triacrylate (ETPTA4).

Le photoamorceur de l'électrolyte liquide solidifiable permet, sous l'effet d'une exposition à un rayonnement, et en particulier d'un rayonnement lumineux, d'initier une polymérisation ou une réticulation de monomères ou de polymères, respectivement, conduisant à la solidification des couches comprenant l'électrolyte liquide solidifiable par formation d'un électrolyte gel polymère. Dans le cas de la polymérisation des monomères, il s'agit ici de polymérisation radicalaire.

Il s'agit, par exemple, d'un photoamorceur du type HMPP (2-Hydroxy-2-methylpropiophenone), tel que commercialisé sous la dénomination Darocur 1173, ou encore de 2,2-Dimethoxy-2-phenylacetophenone (DMPA).

D'autres photoamorceurs ou photo-initiateurs ne sont pas exclus.

Le premier mélange, utilisé pour la couche de cathode, peut comporter une matière active de cathode sous forme de poudres de NMC (Nickel Manganèse Cobalt), NCA (Nickel Cobalt Aluminium), de soufre ou de Li2S.

L'électrolyte liquide solidifiable est compris dans le premier mélange à proportion de 10% à 50% en volume du mélange, par exemple 20%.

Les charges conductrices électriques carbonées dont la proportion peut être comprise entre 5% et 15% en volume du mélange et peuvent comporter notamment des nanotubes de carbone, des nanofibres de carbone et/ou du noir de carbone.

Les poudres actives et les charges conductrices électriques sont mélangées avec l'électrolyte liquide solidifiable.

Le deuxième mélange, utilisé pour la couche d'anode, peut comporter, par exemple, l'électrolyte liquide solidifiable, une matière active d'anode des particules de graphite, de LTO (titanate de lithium) ou, des particules de silicium, lithiées ou non. Ces particules peuvent éventuellement être associées à des particules carbonées, telles que des nanotubes ou des nanofibres de carbone.

L'électrolyte liquide solidifiable est compris dans le deuxième mélange à proportion de 10% à 50% en volume du mélange, par exemple 20%.

Les charges conductrices électriques carbonées dont la proportion peut être comprise entre 5% et 15% en volume du deuxième mélange et peuvent comporter notamment des nanotubes de carbone, des nanofibres de carbone et/ou du noir de carbone.

Les poudres actives et les charges conductrices électriques sont mélangées avec un l'électrolyte liquide solidifiable.

Il convient de préciser que le procédé de l'invention peut être inversé en ce qui concerne la fabrication des électrodes positive et négative de la cellule.

En d'autres termes, l'étape a2, peut être mise en oeuvre avec une matière active d'anode pour la réalisation d'une demi-cellule avec une électrode négative et l'étape b2 peut être mise en oeuvre avec une matière active de cathode pour la réalisation d'une demi-cellule avec une électrode positive.

De manière avantageuse, et en raison de la présence d'un électrolyte pouvant être solidifié dans les mélanges formant les couches de cathode et d'anode, ces électrodes peuvent être formées sans avoir recours à un additif formant liant pour la tenue mécanique des électrodes. En particulier elles ne comportent pas de liant du type « pvdf » (fluorure de polyvinylidène) généralement utilisé d'ordinaire dans les batteries conventionnelles. Ceci réduit leur poids et augmente leur capacité massique, c'est-à-dire l'énergie électrique susceptible d'être stockée par unité de masse, d'un accumulateur utilisant ces électrodes. Un gain en poids de l'ordre de 10% peut être obtenu en comparaison avec des cellules dont les électrodes comportent un liant de type « pvdf », pour une même capacité de charge électrique.

Le dépôt des couches de mélanges sur les substrats conducteurs électriques a lieu lorsque les mélanges sont liquides ou, plus spécifiquement, pâteux.

Il peut avoir lieu notamment au moyen de têtes de dépôt sous la forme de tête d'enduction surfacique (« slot die coating » en terminologie anglaise) permettant de déposer les couches de manière continue sur des bandes défilantes de substrat conducteur électrique. Il convient de préciser que d'autres techniques d'enduction, par des têtes d'extrusion ne sont pas exclues.

La solidification des couches de cathode et d'anode est initiée par leur exposition à un rayonnement initiateur auquel le photoamorceur de l'électrolyte liquide solidifiable est sensible.

Le rayonnement peut être un rayonnement lumineux. Il s'agit, par exemple, d'un rayonnement ultraviolet (UV) produit par une lampe UV, des diodes électroluminescentes UV ou un faisceau laser UV. Le rayonnement lumineux peut également être un rayonnement dans le spectre visible ou proche-infrarouge. Il convient de préciser que le rayonnement lumineux a une fonction d'initiation de la solidification et non une fonction de chauffage. Un rayonnement non-chauffant est au contraire privilégié pour éviter tout risque d'altération thermique de l'électrolyte liquide solidifiable.

La longueur d'onde du rayonnement retenu est fonction du photoamorceur contenu dans l'électrolyte liquide solidifiable utilisé dans le mélange formant la couche d'anode ou de cathode.

Pour assurer une bonne pénétration du rayonnement dans la matière devant être solidifié, il peut présenter, de préférence une longueur d'onde comprise entre 100 nm et 1600 nm.

La solidification peut également être initiée au moyen d'un rayonnement sous la forme d'un faisceau d'électrons à forte pénétration d'énergie allant jusqu'à 300 keV, de préférence à une dose inférieure à 100kGray afin d'éviter la dégradation de constituant des couches, les monomères en particulier.

Il est entendu que la vitesse de solidification dépend de la composition des mélanges considérés de la dose d'exposition au rayonnement initiant cette solidification, de sorte que des ajustements sur ces paramètres doivent naturellement être opérés afin d'assurer que les couches sont effectivement mises en contact avant l'achèvement de leurs solidifications respectives.

La couche de cathode est recouverte d'une première couche d'électrolyte liquide solidifiable, dépourvu de matière active de cathode ou d'anode. De la même façon, la couche d'anode est recouverte d'une deuxième couche d'électrolyte liquide solidifiable, également dépourvu de matière active de cathode ou d'anode.

Comme indiqué précédemment, il est également possible de ne recouvrir que l'une de la couche de cathode et de la couche d'anode d'une couche d'électrolyte liquide dépourvu de matière active et pouvant être solidifié.

Ces couches d'électrolyte liquide sont soumises à un rayonnement initiant leur solidification, compris dans les étapes a4 et b4 mentionnées précédemment. Les couches d'électrolyte peuvent être déposées au moyen de têtes de dépôt comparables à celles utilisées pour le dépôt de la couche de cathode et la couche d'anode sur le premier support et le deuxième support.

Les caractéristiques et dimensionnement des têtes de dépôt peuvent être adaptées au caractère plus ou moins fluide des matières déposées. L'électrolyte dépourvu de matière active s'avère en effet être plus fluide que les mélanges utilisés pour former la couche de cathode et la couche d'anode, en raison de l'absence de matière active et aussi en raison de l'absence des particules carbonées que l'on peut trouver dans les couches d'électrode (cathode et éventuellement anode). Au besoin il est possible d'ajuster la fluidité de l'électrolyte dépourvu de matière active, en le rendant plus pâteux, au moyen d'additifs correcteurs tels que des charges inorganiques d'ajustement de fluidité.

De manière importante, le dépôt de la première couche d'électrolyte dépourvu de matière active et/ou de la deuxième couche d'électrolyte dépourvu de matière active a lieu respectivement après l'initiation de la solidification de la couche de cathode et de la couche d'anode, mais avant l'achèvement de leur solidification.

Cette caractéristique favorise un contact intime et un parfait accrochage des couches d'électrolyte liquide dépourvu de matière active sur les couches de cathode ou d'anode sous-jacentes, comprenant la matière active.

Or, la qualité du contact entre ces couches, permet d'améliorer, dans la cellule de batterie achevée, la conduction ionique entre les électrodes et la couche de séparation formée par les couches d'électrolyte liquides formées sur celles-ci, au cours d'opérations de charge ou de décharge de la batterie.

Le procédé de l'invention permet une certaine interpénétration moléculaire aux interfaces entre les couches d'électrode et la couche de séparation, assurant une continuité de la matière sans barrière ni interface.

Il en résulte des gains en termes de réduction de la résistance interne, de vitesse de charge et de décharge, mais aussi de capacité de charge des accumulateurs d'énergie électrique utilisant les cellules.

Optionnellement, l'électrolyte liquide solidifiable utilisé pour la formation de la première et de la deuxième couche de séparation peut être le même que celui qui entre dans la composition du premier mélange et du deuxième mélange comprenant de la matière active et utilisé pour former les couches de cathode et d'anode.

En effet, l'utilisation du même électrolyte liquide solidifiable facilite l'obtention d'une très bonne continuité de la matière entre les couches successives.

Ainsi, l'électrolyte liquide solidifiable de la couche de cathode, l'électrolyte liquide solidifiable de la couche d'anode, l'électrolyte liquide solidifiable de la première couche d'électrolyte de séparation et l'électrolyte liquide solidifiable de la deuxième couche de séparation peuvent être identiques et sont de préférence identiques.

L'utilisation d'électrolytes liquides identiques ne préjuge pas de l'ajout éventuel dans les différentes couches (couche d'anode, couche de cathode, couche de séparation) d'adjuvants différents en nature ou en proportions, tels que des épaississants ou des fluidifiants ou encore les nanomatériaux conducteurs électriques précédemment évoqués pouvant entrer dans la composition de la couche de cathode ou la couche d'anode. Ces adjuvants peuvent être différents, ou être présents en quantités différentes selon les utilisations de l'électrolyte dans les différentes couches et selon les contraintes rhéologiques de formation des couches.

En particulier, les première et deuxième couches de séparation sont préférablement formées d'un électrolyte liquide dépourvu de matière active et de tout additif conducteur électrique/électronique pour éviter un risque d'autodécharge entre les électrodes de signe opposé de la cellule de batterie lorsqu'elle est assemblée.

Le premier et le deuxième support, pourvus des couches de mélange comprenant de la matière active et des couches d'électrolyte dépourvu de matière active, constituent des demi-cellules qui sont assemblées pour former une cellule de batterie.

L'assemblage, qui s'accompagne de la mise en contact mutuel de la première et de la deuxième couche d'électrolyte dépourvu de matière active, a également lieu après l'initiation de la solidification de l'électrolyte, dès le début de sa solidification et en tout cas avant l'achèvement de sa solidification.

Là encore, cette mesure favorise un contact intime et un parfait accrochage des couches d'électrolyte dépourvu de matière active.

Cette mesure permet d'assurer une continuité dans la conduction ionique à travers les couches d'électrolyte d'une électrode à l'autre, dans la cellule finale, au cours des cycles de charge et de décharge.

La mise en contact de la première couche d'électrolyte dépourvu de matière active et de la deuxième couche d'électrolyte dépourvu de matière active est de préférence une mise en contact direct.

A titre de variante, le procédé peut toutefois comporter la mise en place d'un film séparateur grillagé isolant électrique additionnel entre les couches d'électrolyte dépourvu de matière active ou entre une couche d'électrolyte dépourvu de matière active, et l'une de la couche d'anode et de la couche de cathode, lors de l'assemblage de la première demi-cellule et de la deuxième demi-cellule. Dans ce cas, la mise en contact de ces couches se fait au travers de ce film.

En particulier un film séparateur grillagé isolant électrique en un matériau polymère, sous la forme d'une résille avec un maillage grossier, avec un pas de 2 à 4 mm, peut être intercalé entre la première et la deuxième couche d'électrolyte dépourvu de matière active. Le séparateur peut être imbibé d'électrolyte liquide pouvant être solidifié et peut être exposé à un rayonnement initiateur de la solidification de l'électrolyte liquide juste avant sa prise en sandwich entre les demi-cellules, lors de leur assemblage. Il s'agit dans ce mode de réalisation particulier du même électrolyte liquide, dépourvu de matière active d'électrode et dépourvu de charges carbonées, que celui utilisé pour la réalisation des couches d'électrolyte liquide dépourvu de matière active recouvrant les couches de cathode et d'anode.

Que le film séparateur grillagé soit ou non préalablement imbibé, l'électrolyte dépourvu de manière active, encore liquide, qui se trouve de part et d'autre du film séparateur grillagé peut traverser le film séparateur grillagé. Ceci permet une interpénétration des couches d'électrolyte dépourvu de matière active au travers du séparateur grillagé.

L'interpénétration des couches d'électrolyte dépourvu de matière active est favorisée par le passage des demi-cellules entre une paire de rouleaux réalisant leur assemblage.

Le dépôt des couches d'électrolyte dépourvues de matière active avant achèvement de la solidification des couches de mélange comprenant de la matière active, et la mise en contact mutuel des couches d'électrolyte avant leur solidification permet un achèvement de la solidification après l'assemblage de la cellule. Comme évoqué précédemment, il en résulte une certaine interpénétration moléculaire des couches successives de la cellule de batterie et une continuité de la matière. Ces mesures permettent d'obtenir une excellente conduction ionique entre les différentes couches lors de la charge et de la décharge de la cellule de batterie résultante. Elles permettent également d'éviter un court-circuit entre les couches d'anode et de cathode.

Les étapes a1, a2, a3, et a4 d'une part, et les étapes b1, b2, b3, b4 d'autre part sont réalisées concomitamment. S'il n'est pas indispensable que les étapes de formation des deux demi-cellules soient parfaitement synchrones, elles sont toutefois réalisées dans un laps de temps suffisamment court, pour permettre les associations des couches avant l'achèvement de leur solidification.

On peut noter, à cet égard, que la solidification peut être achevée en quelques secondes après son initiation, de sorte que le caractère concomitant des étapes s'entend en termes de secondes.

De manière avantageuse le procédé peut comporter en outre :
- un calibrage de l'épaisseur de la couche de cathode, respectivement de la couche d'anode, avant le dépôt de la première couche d'électrolyte dépourvu de matière active, respectivement avant le dépôt de la deuxième couche d'électrolyte dépourvu de matière active et/ou
- un calibrage de l'épaisseur de la première couche d'électrolyte dépourvu de matière active et de la deuxième couche d'électrolyte dépourvu de matière active avant l'assemblage des demi-cellules.

Le calibrage des couches permet d'uniformiser leur épaisseur sur toute l'étendue des supports et permet d'améliorer les propriétés électriques de la cellule finale sur toute son étendue. Par ailleurs, le calibrage, lorsqu'il est effectué par un passage des demi-cellules en cours de fabrication entre des rouleaux calibreurs, permet d'exercer une compression des couches, et de parfaire une pénétration de l'électrolyte dans la matière active. Il permet également de résorber d'éventuelles porosités non souhaitées.

Il est entendu que le calibrage n'est pas nécessaire à une mise en contact de bonne qualité entre les couches non encore solidifiées, mais qu'il peut permettre de gagner encore en qualité et en uniformité.

Les rouleaux calibreurs peuvent ainsi constituer également un laminoir. Les rouleaux peuvent être des rouleaux chauffants permettant d'activer la solidification des couches.

Selon un mode de mise en oeuvre préféré du procédé, le premier support et le deuxième support peuvent être respectivement une première bande de support et une deuxième bande de support.

Dans ce cas : la fourniture du premier support et la fourniture du deuxième support peuvent comporter respectivement le déroulement de la première bande de support et le déroulement de la deuxième bande de support respectivement d'un premier rouleau dérouleur et d'un deuxième rouleau dérouleur.

L'ensemble des opérations peuvent avoir lieu selon un procédé dit de rouleau à rouleau (roll to roll) entre les rouleaux dérouleurs et un rouleau enrouleur.

En particulier, le dépôt de la couche de cathode, et le dépôt de la couche d'anode peuvent avoir lieu en continu par défilement de la première bande et de la deuxième bande devant respectivement une première tête de dépôt du premier mélange et une deuxième tête de dépôt du deuxième mélange.

De la même façon le dépôt de la première couche d'électrolyte dépourvu de matière active et le dépôt de la deuxième couche d'électrolyte dépourvu de matière active peuvent avoir lieu en continu par le défilement de la première bande et de la deuxième bande respectivement devant une troisième tête de dépôt d'électrolyte et devant une quatrième tête de dépôt d'électrolyte.

L'organisation des têtes de dépôt dans un équipement de fabrication, et l'agencement de modules correspondant aux différentes opérations du procédé sont décrits ultérieurement.

Comme évoqué précédemment, les têtes de dépôt peuvent être des têtes d'extrusion à fente capables de déposer respectivement les différentes couches de matière sur toute la largeur de la bande, au fur et à mesure du passage de la bande devant les têtes de dépôt. Au moment du dépôt des différentes couches la matière sortant des têtes de dépôt est liquide avec une consistance plus ou moins fluide.

Les têtes de dépôt peuvent également être des têtes telles qu'utilisées de manière courante dans des machines de dépôt de matière active pour la réalisation de batteries lithium-ion.

L'utilisation des termes « dépôt » et « tête de dépôt » ne préjugent pas de la technique de dépôt. Ces termes sont compris comme englobant la fonction d'apport de matière sur les supports mais aussi la fonction d'enduction du support c'est-à-dire la répartition de la matière sur la surface du support sur laquelle elle est déposée.

Par ailleurs, et selon une possibilité particulière de mise en oeuvre du procédé, l'exposition de la couche de cathode et l'exposition de la couche d'anode peuvent avoir lieu par défilement respectivement de la première bande et de la deuxième bande respectivement devant au moins une première source de rayonnement et au moins une deuxième source de rayonnement.

En outre, l'exposition de la première couche de séparation et l'exposition de la deuxième couche de séparation peuvent avoir lieu par défilement respectivement de la première bande et de la deuxième bande devant une troisième source de rayonnement et une quatrième source de rayonnement.

L'exposition des couches précitées s'entend comme leur exposition à un rayonnement adapté au photoamorceur ou photo-initiateur contenu respectivement dans l'électrolyte du premier mélange servant à fabriquer la couche de cathode, dans l'électrolyte du deuxième mélange servant à fabriquer la couche d'anode et/ou dans l'électrolyte dépourvu de matière active, et permettant d'initier la solidification de ces couches par polymérisation et/ou par réticulation.

Comme évoqué précédemment, les sources de rayonnement peuvent être des lampes, des diodes LED, mais aussi des sources laser ou des sources électroniques capables d'émettre des faisceaux d'électrons balayant les matières à solidifier. Il peut s'agir de sources émettant dans le spectre ultraviolet, mais aussi dans le spectre visible et infra-rouge.

L'utilisation d'un rayonnement infra-rouge et des photoamorceurs sensibles dans ce spectre permet une meilleure pénétration de la matière par le rayonnement.

L'ordre et la séquence des opérations du procédé peuvent être fixés par l'agencement des têtes de dépôt de matière et les sources de rayonnement le long de trajets effectués par la première bande de support et la deuxième bande de support entre les rouleaux dérouleurs et des rouleaux presseurs assemblant les demi-cellules formées sur la première bande de support et la deuxième bande de support.

Lorsque le premier support et le deuxième support sont respectivement une première bande de support et une deuxième bande de support, le calibrage de l'épaisseur de la couche de cathode, respectivement le calibrage de la couche d'anode, peut avoir lieu par passage de la première bande de support, pourvue de la couche de cathode respectivement de la deuxième bande de support pourvue de la couche d'anode à travers une première paire de rouleaux calibreurs et une deuxième paire de rouleaux calibreurs. Il convient de préciser que l'épaisseur de la couche de cathode et l'épaisseur de la couche d'anode ne sont pas identiques mais peuvent être fonction l'une de l'autre. Aussi les rouleaux calibreurs peuvent être pilotés par un ordinateur de commande de manière à contrôler l'épaisseur respective des couches, en tenant compte de l'épaisseur des bandes de support qui constituent les collecteurs de courant.

En outre, le calibrage de l'épaisseur de la première couche d'électrolyte dépourvu de matière active et de la deuxième couche d'électrolyte dépourvu de matière active peut avoir lieu par passage de la première demi-cellule, respectivement de la deuxième demi-cellule à travers une troisième paire de rouleaux calibreurs et une quatrième paire de rouleaux calibreurs.

La cellule obtenue par assemblage des deux demi-cellules constitue un accumulateur d'énergie. La fabrication de rouleau à rouleau, de la manière décrite, permet d'obtenir des cellules en bande, de grandes dimensions, en particulier de grande longueur, avec une capacité de stockage d'énergie quasiment illimitée. De telles cellules peuvent utilement équiper des installations stationnaires de stockage d'énergie électrique.

Il est toutefois possible d'obtenir des cellules plus petites simplement par découpage des cellules. En effet le procédé peut comporter, postérieurement à l'assemblage des demi-cellules, une opération de formatage de la cellule comprenant un découpage de la cellule de batterie en cellules formatées. Le découpage est traversant et s'entend perpendiculairement au premier support et au deuxième support. Il peut être réalisé sur des tables de découpage au laser similaires à celles utilisées pour le découpage de tissus. Un découpage au laser permet une qualité de coupe avec la fusion locale des matériaux et permet d'éviter tout risque de court-circuit électrique, notamment entre les collecteurs de courant. Une pluralité de cellules formatées peut ainsi être obtenue à partir d'une cellule unique de grande dimension.

Comme la cellule est dépourvue d'électrolyte liquide, tout risque d'écoulement d'électrolyte est écarté et le découpage ne demande pas de précaution particulière concernant l'électrolyte.

Les cellules formatées finalement obtenues peuvent être de préférence des cellules avec des faces principales rectangulaires et avec des coins arrondis de manière à éviter une fragilité des coins.

Enfin, le procédé peut comporter la mise en place d'un revêtement de matériau isolant électrique de protection sur au moins un chant de découpe de la cellule de batterie formatée. La protection du ou des chant(s) résultant du découpage de la cellule en cellules formatées n'est en soi pas indispensable au fonctionnement des cellules. Elle est toutefois souhaitable en raison de la très faible épaisseur des cellules, de l'ordre de quelques centaines de micromètres, pour éviter tout risque de court-circuit inopiné entre les collecteurs de courant. Le matériau isolant sur les chants de découpe peut également être mis en place sous une forme liquide et solidifié par exposition à un rayonnement. Il s'agit, dans ce cas, d'un isolant électrique photo-polymérisable.

Enfin, les chants de la cellule de batterie formatée peuvent être protégés par la mise en place sur les chants d'un ruban adhésif dont la largeur correspond à l'épaisseur de la cellule, ou de plusieurs cellules empilées.

L'invention concerne également un procédé de fabrication d'une batterie Le procédé comprend la fabrication d'une pluralité de cellules de batterie formatées de la manière précédemment décrite, et la formation d'un empilement des cellules de batterie formatées, la formation de l'empilement comprenant la mise en contact d'une face libre conductrice du premier support d'une cellule de batterie formatée avec une face libre conductrice du deuxième support d'une cellule de batterie formatée suivante de l'empilement.

Le premier support d'une cellule forme un collecteur de courant et présente une face en contact avec la couche de cathode et une face opposée libre conductrice électrique. De la même façon, le deuxième support d'une cellule forme également un collecteur de courant et présente une face en contact avec la couche d'anode et une face opposée libre conductrice électrique. On entend ici par « face libre » une face du support collecteur de courant qui ne porte pas d'électrode.

Les faces libres des collecteurs de courants servent dans la batterie de connecteurs pour l'interconnexion électrique des cellules.

La batterie peut comporter un empilement d'une pluralité de cellules formatées mises en série avec une alternance de demi-cellules avec des couches de matière active positive et négative, c'est-à-dire avec une alternance cathodes-anodes. Le fait d'empiler les cellules formatées permet de réaliser directement leur interconnexion par la mise en contact physique et électrique des faces libres des supports formant collecteur de courant.

D'autres schémas de mise en série et/ou en parallèle des cellules formatées pour la réalisation de batteries d'accumulateurs ne sont bien sûr pas exclus. Lorsque les cellules ne sont pas empilées, des conducteurs électriques additionnels peuvent être prévus pour relier électriquement les collecteurs de courant des cellules selon un schéma d'interconnexion souhaité.

L'invention concerne enfin un équipement convenant à la formation de cellules de batterie telles que décrites précédemment. L'équipement comprend :
- une première ligne de fabrication pour la fabrication d'une première demi-cellule ;
- une deuxième ligne de fabrication pour la fabrication d'une deuxième demi-cellule ;
- une paire de rouleaux d'assemblage pour l'assemblage d'une première demi-cellule formée sur la première ligne de fabrication et d'une deuxième demi-cellule formée sur la deuxième ligne de fabrication ; et
- un rouleau enrouleur de cellule de batterie disposé en aval de la paire de rouleaux d'assemblage.

Le rouleau enrouleur, qui peut être un rouleau moteur, est prévu pour enrouler une batterie terminée formée d'une demi-cellule en provenance de la première ligne de fabrication et d'une demi-cellule en provenance de la deuxième ligne de fabrication.

On entend par première ligne de fabrication et deuxième ligne de fabrication des installations homologues de l'équipement, similaires l'une à l'autre et dédiées à la fabrication simultanée de deux demi-cellules. Les lignes de fabrication se rejoignent au niveau des rouleaux assembleurs où les demi-cellules sont assemblées.

En particulier, au moins l'une de la première ligne de fabrication et de la deuxième ligne de fabrication peut comporter :

un rouleau dérouleur convenant au déroulement d'une bande de support et, dans l'ordre entre le rouleau dérouleur et la paire de rouleaux d'assemblage :
- un premier module d'enduction convenant à la formation d'une couche de cathode, respectivement d'une couche d'anode ;
- un premier module de laminage ;
- un deuxième module d'enduction convenant à la formation d'une couche d'électrolyte dépourvu de matière active ; et
- un deuxième module de laminage.

Chaque module comprend les organes nécessaires à exécuter une ou plusieurs opérations du procédé de fabrication.

Les différents modules constituant les lignes de fabrications peuvent être déplacés l'un par rapport à l'autre, et par rapport à la paire de rouleaux d'assemblage de manière à pouvoir ajuster respectivement la distance séparant les modules consécutifs.

La modification et le contrôle de cette distance permettent de fixer le temps s'écoulant entre les opérations effectuées par chaque module, sachant que les bandes de support, et les demi-cellules formées sur les bandes de support circulent, à une vitesse de défilement fixée, d'un module à l'autre de rouleau à rouleau entre les rouleaux dérouleurs et le rouleau enrouleur.

Il est ainsi possible d'ajuster le temps mis entre d'une part le dépôt et l'exposition d'une couche à un rayonnement, et d'autre part son laminage. Il est également possible d'ajuster le temps mis entre le dépôt et/ou l'exposition des couches à un rayonnement amorçant une solidification de ces couches et l'assemblage des dem i-cellules.

Le premier module d'enduction et le deuxième module d'enduction comprennent chacun une tête de dépôt de couche de cathode, respectivement de couche d'anode et au moins une source de rayonnement associée à la tête de dépôt.

Le premier et le deuxième module de laminage comprennent respectivement une paire de rouleaux calibreurs et un capteur d'épaisseur associé respectivement à la paire de rouleaux calibreurs. La fonction des modules de laminage est multiple. Une première fonction est de fixer l'épaisseur des couches déposées. Une autre fonction est d'uniformiser l'épaisseur des couches. Une autre fonction encore, notamment du deuxième module de laminage est de presser la couche d'électrolyte dépourvu de matière active sur la couche de cathode ou d'anode sous-jacente pour améliorer le soudage des couches. Enfin, lorsque les rouleaux calibreurs sont chauffants une fonction peut être d'augmenter la vitesse de solidification des couches.

Le capteur d'épaisseur associé aux rouleaux calibreurs des modules de laminage émet un signal qui peut être combiné à d'autres capteurs d'épaisseur d'autres modules ou à un capteur d'épaisseur de la bande de support disposé après les rouleaux dérouleurs.

La combinaison de l'ensemble de ces signaux dans une unité de calcul, permet de déterminer l'épaisseur des différentes couches, ou des demi-cellules au cours de leur fabrication, et ajuster, au besoin, un espacement des rouleaux calibreurs de manière à atteindre des valeurs de consigne prédéterminées.

Le positionnement et l'espacement des modules sur le trajet des demi-cellules conjugués au contrôle de la vitesse de défilement des bandes de support permettent de contrôler finement les intervalles de temps séparant deux opérations distinctes et ainsi le degré de solidification des couches déposées sous forme liquide ou pâteuse avant les opérations subséquentes de la fabrication de la cellule.

En particulier, on peut ainsi contrôler l'intervalle de temps séparant (i) l'exposition d'une couche d'électrode initialement pâteuse par exposition à un rayonnement UV ou à un faisceau d'électrons amorçant sa solidification et (ii) la mise en contact de cette couche avec une autre couche, comme par exemple lors du dépôt d'une couche d'électrolyte liquide solidifiable destinée à former une couche de séparation sur une couche d'anode ou de cathode exposée. Le contrôle de l'intervalle de temps permet de s'assurer que le contact entre les deux couches se fera initialement lorsqu'elles seront dans des états liquides ou pâteux, ce qui permettra un contact intime entre ces couches.

Le même principe s'applique à la mise en contact, après exposition, de deux couches d'électrolyte dépourvu de matière active destinées à former ensemble une couche de séparation interposée entre une couche de cathode et une couche d'anode.

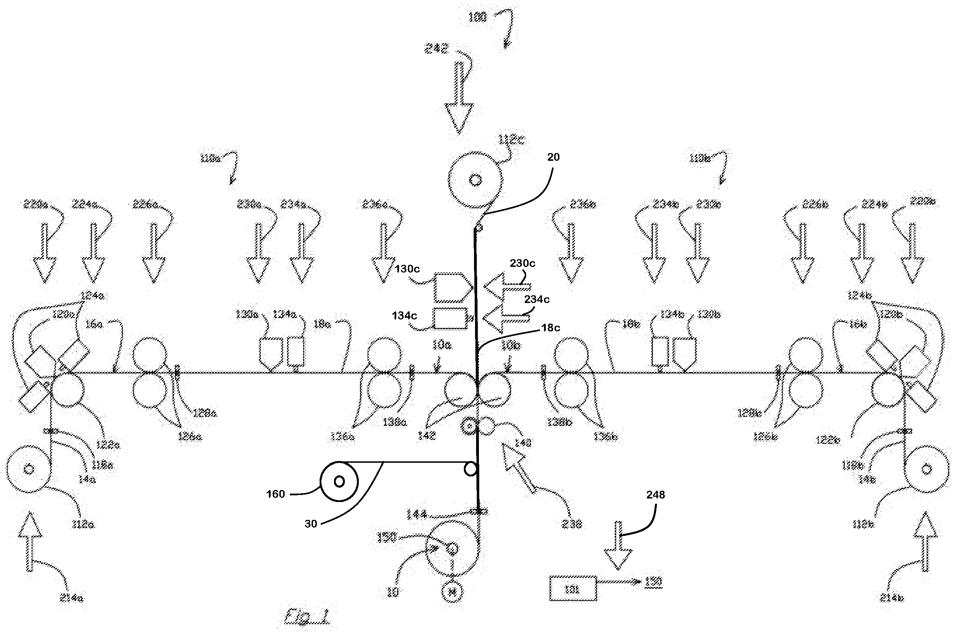

Il est entendu que les intervalles de temps considérés correspondent à l'application d'une étape de fabrication à un emplacement donné d'une bande de support et que la vitesse de défilement correspond à la vitesse de déplacement de l'emplacement donné le long d'un parcours allant d'un module à un autre correspondant respectivement aux différentes opérations du procédé de fabrication d'une batterie. Ainsi, l'intervalle de temps Δt séparant l'application de deux étapes du procédé de fabrication s'estime par Δt = d/V où d est la distance parcourue par un une bande de support entre deux modules de mise en oeuvre de ces deux étapes du procédé de fabrication et V est la vitesse de défilement linéaire de la bande de support. Ainsi, dans un procédé continu de fabrication tel que celui illustré par la figure 1, dire que deux opérations s'appliquent successivement s'entend dans le sens où ces deux opérations s'appliquent successivement à un emplacement donné d'un support, d'une bande ou d'un film en défilement.

Les sources de rayonnement des modules d'enduction peuvent au besoin être démultipliées en plusieurs sources pour mieux exposer la matière à solidifier. On peut ainsi prévoir, par exemple, une source de rayonnement équivalent à une source présentant une ouverture de 200 mm dans la direction de défilement des couches, constituée d'un ensemble de cinq sources séparées de rayonnement présentant chacune une ouverture de sortie s'étendant sur 40 mm dans la direction de défilement des couches.

Les sources de rayonnement sont, par exemple, des sources de rayonnement ultraviolet, proche-infrarouge, ou visible et plus généralement des sources compatibles avec les photoamorceurs présents dans les matières liquides devant être solidifiées. Par ailleurs un réglage du rayonnement émis par les sources peut être prévu pour ajuster son intensité en fonction de paramètres tels que l'épaisseur des couches, leur composition et leur densité, la vitesse de défilement des bandes de support/ des demi-cellules devant les modules, l'éloignement des modules etc.

En particulier, les charges carbonées tendent à arrêter les rayonnements UV et électroniques, une augmentation dans la proportion des charges carbonées dans les couches impose donc une augmentation des doses d'exposition afin de correctement amorcer la solidification, doses contrôlées par la puissance, le nombre et les surfaces insolées par les sources de rayonnement, ainsi que par les vitesses de défilement des supports, commandées par une unité de pilotage lors d'une fabrication en roll-to-roll.

Des vitesses de défilement adéquates sont de 1 à 10 m/mn dans le cas d'une exposition par rayonnement UV et de 3 à 30 m/mn dans le cas d'une exposition par faisceau d'électrons, plus puissants et pénétrants que les rayonnements UV.

Par ailleurs, l'équipement peut comporter un outil de découpage de bordure. Il peut être disposé respectivement entre le deuxième module de laminage de chaque ligne de fabrication et la paire de rouleaux d'assemblage. L'outil de découpage de bordure peut également être disposé après la paire de rouleaux d'assemblage. Chaque outil de découpage peut être pourvu de deux lames contrarotatives permettant de découper simultanément deux bords latéraux opposés des bandes défilantes. Il permet de fixer la largeur des demi-cellules avant leur assemblage.

Selon une variante, les outils de découpage de bordure à lame peuvent être remplacés par un équipement de découpage par faisceau laser.

Les deux lignes de fabrication, utilisées respectivement pour la fabrication de la première demi-cellule et pour la fabrication de la deuxième demi-cellule, peuvent être réunies en une seule machine avec une commande synchronisée de l'avancement des bandes.

Selon un mode de réalisation avantageux, le rouleau enrouleur peut être un rouleau moteur. On considère que le rouleau enrouleur est un rouleau moteur lorsque l'enroulement de la cellule de batterie sur le rouleau enrouleur est mis à profit pour exercer sur la cellule de batterie, et ses composants, des forces de traction suffisantes pour provoquer le déroulement des bandes des rouleaux dérouleurs, et l'avancement des bandes et des demi-cellules formées sur les bandes depuis les rouleaux dérouleurs vers le rouleau enrouleur. En particulier, l'avancement des bandes peut être synchronisé par l'utilisation d'un rouleau enrouleur moteur.

Les rouleaux dérouleurs peuvent être des rouleaux freinés. L'utilisation de rouleaux dérouleurs freinés, notamment en conjonction avec un rouleau enrouleur moteur, permet d'assurer une certaine tension des bandes et des demi-cellules, et permet d'éviter des à-coups dans leur déroulement. Le freinage des rouleaux dérouleurs peut être un freinage par friction ou un freinage électromagnétique.

D'autres organes, tels que les modules de laminage ou les modules d'enduction, peuvent également être synchronisés avec l'avancement des bandes au moyen d'une unité de pilotage centrale.

L'unité de pilotage centrale peut comporter, par exemple, un circuit électronique de pilotage dédié, configuré pour la commande des différents organes de l'équipement. En particulier, l'équipement peut comporter une unité de pilotage d'au moins l'un parmi le rouleau enrouleur, le premier module d'enduction, le deuxième module d'enduction, le premier module de laminage et le deuxième module de laminage. L'unité de pilotage peut être configurée pour asservir des moteurs d'entrainement des composants ou un débit des modules d'enduction. L'unité de pilotage peut également être mise à profit pour commander l'intensité d'un freinage des rouleaux dérouleurs, de manière à contrôler la tension des bandes de support.

L'unité de pilotage peut recevoir le signal d'un ou plusieurs capteurs de vitesse de rotation associés à un ou plusieurs rouleaux des lignes de fabrication. Ces signaux peuvent être utilisés par l'unité de pilotage pour déterminer une vitesse de défilement des bandes et des demi-cellules. Les signaux peuvent aussi être utilisés pour asservir le freinage des rouleaux dérouleurs et/ou l'entrainement moteur du rouleau enrouleur, de manière à fixer une vitesse de défilement constante et une tension constante des bandes et des demi-cellules.

Comme évoqué précédemment, l'équipement de l'invention convient à la réalisation de cellules de batterie à électrolyte solide obtenu par solidification d'un électrolyte liquide. Il s'avère également convenir à la réalisation de cellules de supercondensateur de grande surface, à électrolyte solide obtenu par solidification d'un électrolyte liquide, selon un procédé du type « rouleau à rouleau » (roll to roll).

Tout comme les cellules de batterie peuvent être reliées en série ou en parallèle pour former des batteries d'accumulateurs, les cellules de supercondensateur peuvent être reliées en série ou en parallèle pour former des batteries de supercondensateurs.

D'autres caractéristiques et avantages de l'invention ressortent de la description qui suit, en référence aux figures des dessins. Cette description est donnée à titre illustratif et non limitatif.

### Brève description des figures

La figure 1 est une représentation schématique des différents organes d'un équipement de fabrication d'une cellule conforme à l'invention. Elle indique également les différentes étapes d'un procédé de fabrication de la cellule.
La figure 2 est une représentation schématique d'une ligne de fabrication d'un équipement de fabrication de cellules comparable à celui de la figure 1 et illustre une organisation en modules des organes de l'équipement.
La figure 3 est une vue schématique selon une face principale d'une cellule de batterie formatée fabriquée conformément à l'invention.
La figure 4 est une coupe schématique d'une partie d'un empilement de cellules formatées fabriquées conformément à l'invention et constituant une batterie d'accumulateurs.

Les figures sont représentées en échelle libre.

Description détaillée de modes de mise en oeuvre de l'invention

Dans la description qui suit des parties identiques, similaires ou équivalentes des différentes figures sont repérées avec les mêmes signes de référence de manière à pouvoir se reporter d'une figure à l'autre.

La figure 1 montre un équipement 100 pour la fabrication d'une cellule de batterie 10 conformément à l'invention.

L'équipement 100 est pourvu de deux lignes de fabrication 110a, 110b homologues, comportant les mêmes organes, et qui sont destinées à former simultanément deux demi-cellules 10a, 10b. Les lignes de fabrications 110a, 110b se rejoignent en une paire de rouleaux d'assemblage 142 destinés à former une cellule de batterie 10 à partir des demi-cellules 10a, 10b. Les deux lignes de fabrication 110a, 110b sont configurées pour la formation respectivement d'une demi-cellule 10a avec une électrode positive (cathode) et une demi-cellule 10b avec une électrode négative (anode).

Toutefois le choix de former une demi-cellule avec une électrode positive ou négative ne dépend pas des équipements mais des matériaux mis en oeuvre, de sorte que la nature de la demi-cellule réalisée, avec une électrode positive ou négative, n'est pas dépendante de la ligne de fabrication. Il serait donc possible de réaliser une demi-cellule avec une électrode positive sur la deuxième ligne de fabrication 110b et une cellule avec une électrode négative sur la première ligne de fabrication 110a.

Chaque ligne de fabrication 110a, 110b comprend un rouleau dérouleur destiné à fournir un support conducteur électrique servant de collecteur de courant de la demi-cellule en question.

Un premier rouleau dérouleur 112a délivre ainsi une première bande de support 14a et un deuxième rouleau dérouleur 112b délivre une deuxième bande de support 14b. Les opérations de fourniture d'un premier support 14a et de fourniture d'un deuxième support 14b sont indiquées symboliquement par des flèches, avec les références 214a, 214b respectivement.

Par simplification le premier support et le deuxième support, ainsi que les bandes qui les constituent respectivement, sont repérés avec les mêmes signes de référence 14a, 14b. Les bandes de support 14a, 14b sont destinées à former les collecteurs de courant de la cellule de batterie 10. Elles peuvent être des films métalliques, par exemple en cuivre, en aluminium, en acier inoxydable, en nickel, mais aussi des films de polymère conducteur, des voiles de fibres conductrices, ou peuvent comporter plusieurs couches de matière assurant des fonctions de tenue mécanique et de conduction électrique. L'épaisseur des bandes de support peut être de l'ordre de 10 à 200 micromètres.

La longueur des bandes peut être importante, par exemple plusieurs centaines de mètres. Elle n'est limitée que par la taille des rouleaux. Par ailleurs, dans l'exemple de réalisation décrit, la largeur des bandes de support est de 1200mm. D'autres largeurs, plus grandes ou plus petites peuvent être retenues.

En aval des rouleaux dérouleurs 112a, 112b, chaque ligne de fabrication peut comporter un jeu de rouleaux de renvoi, non représentés, permettant de contrôler la tension de la bande de support 14a, 14b délivrée par le rouleau, ainsi qu'un capteur d'épaisseur 118a, 118b.

D'autres rouleaux de convoyage, non représentés, peuvent être prévus pour soutenir les bandes de support tout au long de la ligne de fabrication.

Des tables de convoyage, recouvertes de feuilles d'acier inoxydable ou de polymères de type PVC, peuvent également être prévues pour soutenir les bandes de support.

Les bandes de support 14a, 14b rejoignent respectivement une première tête de dépôt 120a et une deuxième tête de dépôt 120b, respectivement de la première et la deuxième ligne de fabrication.

Ces têtes de dépôt sont respectivement alimentées en un premier mélange comprenant une matière active de cathode, des charges conductrices électriques carbonées, et un électrolyte à l'état liquide et en un deuxième mélange comprenant une matière active d'anode, des charges conductrices électriques carbonées, et un électrolyte à l'état liquide.

Aussi, au fur et à mesure du défilement de la première bande de support 14a devant la première tête de dépôt 120a et du défilement de la deuxième bande de support 14b devant la deuxième tête de dépôt 120b, une première couche de premier mélange comprenant de la matière active de cathode est déposée sur la première bande de support 14a : il s'agit de la couche de cathode 16a.

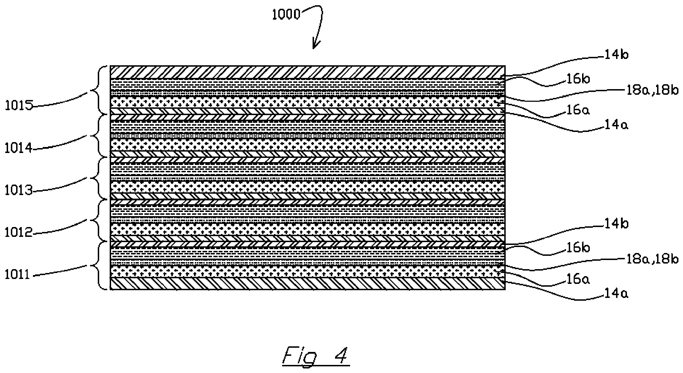

De la même façon une deuxième couche de deuxième mélange comprenant de la matière active d'anode est déposée sur la deuxième bande de support 14b : il s'agit de la couche d'anode 16b. Les couches ne sont pas détaillées sur la figure 1, mais sont visibles sur la figure 4.

On peut noter qu'un rouleau de renvoi de bande 122a, 122b fait face respectivement à chaque tête de dépôt 120a, 120b de manière à garantir un bon maintien de la bande de support 14a, 14b au moment de son enduction.

Le premier mélange et le deuxième mélange, qui forment les couches de cathode et d'anode, sortent des têtes de dépôt, avec une consistance pâteuse. Ils comportent chacun, en plus de la matière active, et d'éventuelles charges conductrices électriques carbonées déjà évoquées, un électrolyte à l'état liquide susceptible d'être solidifié.

L'épaisseur de la couche de cathode et l'épaisseur de la couche d'anode peut être de l'ordre de 50 à 300 micromètres.

Les opérations de dépôt de la couche de cathode et de la couche d'anode sont symboliquement indiquées par des flèches 220a, 220b. Le dépôt peut être effectué sur toute la largeur des bandes de support. Toutefois, dans l'exemple décrit, le dépôt est limité à une largeur de 1160mm, en laissant libres les bordures des bandes 14a, 14b.

Cette mesure permet d'éviter un éventuel risque de débordement de mélange liquide sur les bords latéraux des bandes.

De part et d'autre de la première tête de dépôt 120a on trouve des premières sources de rayonnement UV 124a pour appliquer à la couche de cathode 16a un rayonnement destiné à initier la solidification de cette couche. Dans l'exemple de réalisation de la figure 1, il s'agit de sources de rayonnement dédoublées permettant d'exposer les deux faces de la couche de cathode 16a.

La solidification de la couche 16a est due à celle de l'électrolyte liquide solidifiable qu'elle contient. L'électrolyte est en effet pourvu d'un photoamorceur compatible avec le rayonnement des premières sources de rayonnement 124a.

De manière similaire, sur la deuxième ligne de fabrication 110b des deuxièmes sources de rayonnement UV 124b sont disposées de part et d'autre de la deuxième tête de dépôt 120b pour initier la solidification de la couche d'anode 16b.

Les opérations d'exposition de couche de cathode 16a et d'exposition de la couche d'anode 16b à des rayonnements initiateurs de leur solidification sont indiquées par des flèches 224a, 224b.

De manière intéressante on peut noter que, dans l'exemple de mise en oeuvre décrit, l'insolation des couches a lieu au moment même de leur dépôt sur les bandes de support ou immédiatement après ce dépôt.

Une exposition après le dépôt est également envisageable, mais elle ne permet pas une exposition sur les deux faces des couches déposées.

Après ces opérations, les bandes des deux lignes de fabrication 110a, 110b passent respectivement entre une première paire de rouleaux calibreurs 126a et une deuxième paire de rouleaux calibreurs 126b.

Les bandes munies de leur couche contenant de la matière active d'électrode, c'est-à-dire respectivement de la couche de cathode et de la couche d'anode, subissent un calandrage visant à calibrer l'épaisseur des couches de mélange et éviter les porosités.

L'épaisseur des bandes munies de leur couche d'électrode est mesurée à la sortie des rouleaux calibreurs au moyen de capteurs d'épaisseur 128a, 128b. Les capteurs d'épaisseur sont, par exemple, des capteurs à faisceaux lumineux triangulés.

Par différenciation des mesures effectuées avec les capteurs d'épaisseur 128a, 128b à la sortie des rouleaux calibreurs et des mesures effectuées par les capteurs d'épaisseur 118a, 118b à la sortie des rouleaux dérouleurs 112a, 112b, il est possible de connaître l'épaisseur des couches de mélange.

Cette épaisseur peut être comparée à une épaisseur de consigne pour effectuer un contrôle asservi de l'écartement des paires de rouleaux calibreurs 126a, 126b et des têtes de dépôt 120a, 120b.

L'épaisseur de la couche formant l'électrode positive (cathode) de même que l'épaisseur de la couche formant l'électrode négative peut être comprise entre 60 et 300 micromètres.

Les opérations de calibrage d'épaisseur de la couche de cathode 16a et de la couche d'anode 16b sont indiquées par des flèches 226a, 226b.

Après ce premier calibrage d'épaisseur, les bandes de support 14a, 14b munies des couches de cathode 16a et d'anode 16b comprenant une matière active d'électrode, passent respectivement devant une troisième tête de dépôt 130a et une quatrième tête de dépôt 130b. La troisième tête de dépôt 130a fait partie de la première ligne de fabrication 110a et la quatrième tête de dépôt 130b fait partie de la deuxième ligne de fabrication 110b. Ces têtes de dépôt déposent respectivement une première couche de séparation 18a sous forme d'un électrolyte dépourvu de matière active sur la couche de cathode 16a de la première bande de support 14a et une deuxième couche de séparation 18b sous forme d'un électrolyte dépourvu de matière active sur la couche d'anode 16b de la deuxième bande de support 14b.

Les opérations de dépôt des couches de séparation 18a et 18b, formées d'électrolyte, sont respectivement indiquées par des flèches 230a, 230b. L'électrolyte est déposé sous forme liquide, de préférence sur une largeur égale à celle de la couche de cathode 16a et la couche d'anode 16b. Un même électrolyte liquide solidifiable peut être utilisé pour le dépôt des couches de séparation 18a, 18b sur les deux lignes de fabrication 110a, 110b. Il peut s'agir notamment de l'électrolyte liquide solidifiable entrant dans la composition de la couche de cathode 16a et de la couche d'anode 16b, sous-jacentes. L'électrolyte contient un photoamorceur permettant l'initiation de sa solidification sous l'effet d'un rayonnement lumineux. Il peut s'agir d'un rayonnement ultraviolet, visible ou proche infrarouge, par exemple.

L'épaisseur des couches d'électrolyte dépourvu de matière active est, par exemple, de l'ordre de 10 à 60 micromètres.

La distance entre la première et la troisième tête de dépôt d'une part, et la distance entre la deuxième et la quatrième tête de dépôt d'autre part, est suffisamment faible, et la vitesse de défilement des bandes de support est suffisamment élevée pour déposer les couches de séparation 18a, 18b avant l'achèvement de la solidification des couches de cathode 16a et d'anode 16b sous-jacentes. La solidification des couches peut avoir lieu en quelques secondes correspondant à un avancement des bandes de quelques mètres le long des lignes de fabrication 110a, 110b.

Une initiation de la solidification des couches de séparation 18a, 18b a lieu, juste après leur dépôt, par une nouvelle exposition à un rayonnement lumineux. Les bandes défilent devant une troisième source de rayonnement UV 134a et une quatrième source de rayonnement UV 134b disposées respectivement après la troisième et la quatrième tête de dépôt 130a, 130b.

L'exposition des couches de séparation 18a, 18b e est indiquée par des flèches 234a, 234b. Cette exposition a pour effet d'initier une solidification des couches de séparation 18a, 18b.

A l'issue de ces opérations, la première bande de support 14a et la deuxième bande de support 14b, pourvues des couches précitées, passent de nouveau par des rouleaux calibreurs. Il s'agit plus précisément d'une troisième paire de rouleaux calibreurs 136a et d'une quatrième paire de rouleaux calibreurs 136b, respectivement.

Tout comme la première et la deuxième paire de rouleaux calibreurs, la troisième paire de rouleaux calibreurs, et la quatrième paire de rouleaux calibreurs sont suivis de capteurs d'épaisseur 138a, 138b. Les mesures de ces capteurs d'épaisseur comparées à celles des capteurs 128a, 128b associées à la première et à la deuxième paire de rouleaux calibreurs, permettent de fixer l'épaisseur des couches de séparation 18a, 18b, et d'ajuster au besoin l'écartement des rouleaux calibreurs.

Le calibrage de l'épaisseur des couches de séparation 18a, 18b sont des opérations indiquées par des flèches 236a et 236b respectivement. L'épaisseur finale peut être comprise, par exemple entre 10 et 60 micromètres. De préférence, elle peut être de 30 micromètres.

Après le calibrage, les bandes de support 14a, 14b, pourvues respectivement des couches 16a, 16b comprenant de la matière active d'électrode et des couches de séparation 18a, 18b forment les demi-cellules 10a, 10b.

Après cette opération, les demi-cellules 10a, 10b en bande, atteignent la paire de rouleaux d'assemblage 142, déjà évoquée. Les demi-cellules sont assemblées en mettant en contact leurs couches de séparation respectives 18a, 18b. L'assemblage peut être un assemblage direct ou un assemblage accompagné de l'interposition d'une couche d'un film séparateur grillagé isolant électrique 20 additionnel, en provenance d'un rouleau dérouleur 112c. Il peut s'agir, par exemple, d'un grillage en fil polymère isolant électrique. L'opération d'assemblage des demi-cellules est indiquée avec une flèche 242. L'interposition du film 20 ne doit pas empêcher de contact direct entres les couches de séparation 18a et 18b afin d'assurer une bonne interface de contact entre ces couches.

Optionnellement, il est possible de procéder à une opération de dépôt d'une couche de séparation 18c sur le film séparateur isolant électrique 20, comme indiqué par la flèche 230c. L'électrolyte est déposé sous forme liquide par une cinquième tête de dépôt 130c sur le film 20 en défilement devant la cinquième tête de dépôt, de préférence sur une largeur égale à celle du film séparateur grillagé isolant électrique 20 et de manière à imbiber ce dernier. Un même électrolyte liquide peut être utilisé que pour le dépôt des couches de séparation 18a, 18b et de manière similaire aux opérations subies par ces couches, une initiation de la solidification du film 20 a lieu, juste après son dépôt, par exposition à un rayonnement lumineux. Le film 20 défile devant une cinquième source de rayonnement UV 134c disposée après la cinquième tête de dépôt 130c, pour être exposé au rayonnement durant une opération d'exposition indiquée par la flèche 234c.

La distance séparant les rouleaux d'assemblage 142 respectivement des troisième, quatrième et cinquième sources de rayonnement est suffisamment petite et la vitesse de défilement des bandes est suffisamment élevée, pour que l'assemblage des demi-cellules ait lieu avant l'achèvement de la solidification des couches de séparation 18a, 18b et éventuellement 18c. Ainsi la solidification se poursuit après l'assemblage des cellules, pendant quelques instants.

Il est à noter que les couches de séparation 18a, 18b et 18c peuvent chacune être employées seules ou en combinaison avec l'une ou l'autre ou les deux autres couches de séparation. Ainsi, on peut utiliser les deux couches 18a et 18b ensembles en contact direct, les couches 18a, 18b et 18c seules, la couche 18c en combinaison avec l'une ou l'autre des couches 18a et 18b ou en combinaison avec ces deux couches 18a et 18b. L'important est d'assurer d'une part la présence d'une couche de séparation (éventuellement constituée d'une combinaison quelconque des couches 18a, 18b et 18c) entre les couches de cathode 16a et d'anode 16b, et d'autre part un contact intime entre ces couches afin d'assurer une bonne continuité dans le déplacement des ions entre la cathode et l'anode.

Les couches de séparations peuvent avoir une même composition ou des composition différentes, mais chacune comprenant un mélange électrolyte liquide solidifiable comprenant un électrolyte liquide de séparation conducteur d'ions, un mélange monomère ou polymère de séparation et un amorceur de polymérisation ou de réticulation du premier mélange monomère ou polymère de séparation. Comme pour les couches de cathode et d'anode, la présence de monomère ou de polymère ainsi que d'un amorceur de polymérisation ou de réticulation de ce monomère ou ce polymère assure l'aspect solidifiable des couches de séparation.

Un capteur d'épaisseur 144 qui suit les rouleaux d'assemblage 142 permet de mesurer l'épaisseur de la cellule assemblée et d'ajuster au besoin l'écartement des rouleaux d'assemblage 142.

On peut appliquer un film électriquement isolant 30 fourni par un rouleau dévideur 160 sur le premier support ou le deuxième support après assemblage de la première demi-cellule et la deuxième demi-cellule ; et d'enrouler, autour du rouleau enrouleur 150, la première demi-cellule et la deuxième demi-cellule assemblées et le film électriquement isolant appliqué sur le premier support ou le deuxième support, de manière à isoler les cellules les unes des autres. Ceci est particulièrement avantageux lorsque les batteries sont de type sodium-soufre ou lithium-soufre, qui sont électriquement chargées lors de leur fabrication et qu'il est alors préférable d'isoler les unes des autres pour prévenir de possibles décharges électriques.

Après l'assemblage des demi-cellules 10a, 10b, la cellule 10 passe par un outil 140 de découpage de bords. Il s'agit d'un outil à lames rotatives ou à têtes laser. Le découpage, indiqué sur la figure avec une flèche 238, se fait sur les bords latéraux de la cellule, de manière à fixer sa largeur. Il permet d'éliminer les bordures latérales des bandes de support 14a, 14b qui n'auraient pas reçu de matière active d'électrode, et/ou d'électrolyte, pour ne conserver qu'une partie centrale où la cellule est complète et sans bavures.

La cellule 10, assemblée, est enfin enroulée sur un rouleau enrouleur 150.Le rouleau enrouleur 150 a plusieurs fonctions. Une première fonction est d'enrouler la cellule de batterie assemblée. Une autre fonction est une fonction motrice. En effet la rotation du rouleau enrouleur 150 a pour effet d'exercer une traction sur la cellule de batterie assemblée et par conséquent sur les demi-cellules, sur les bandes de support et, le cas échéant, sur le film séparateur grillagé isolant électrique 20. Ainsi l'avancement des composants en bande le long des lignes de fabrication est assuré par la mise en rotation du rouleau enrouleur.

Les rouleaux dérouleurs peuvent être des rouleaux entrainés et/ou freinés ou des rouleaux à rotation libre. Dans le cas de rouleaux à rotation libre, le déroulement résulte simplement de la traction exercée par le rouleau enrouleur moteur 150. Lorsque les rouleaux dérouleurs sont freinés ou entrainés, le freinage ou l'entrainement peuvent être asservis à la rotation du rouleau enrouleur moteur 150 de manière à ajuster la tension des bandes de support et des composants en bande circulant le long des lignes de fabrication.

Une unité de pilotage 101 de l'équipement peut être prévue pour l'asservissement de différents paramètres tels que la vitesse d'enroulement, la tension des bandes de support, mais aussi l'enduction des bandes de support ou les opérations de calandrage précédemment décrites. L'unité de pilotage commande ainsi au moins l'un parmi le rouleau enrouleur, le premier module d'enduction, le deuxième module d'enduction, le premier module de laminage et le deuxième module de laminage.

L'unité de pilotage asservit, par exemple, le rouleau enrouleur moteur 150 en agissant sur une consigne de vitesse de son moteur d'entrainement M.

Ainsi, au cours d'une étape 248 indiquée par une flèche sur la figure 1, l'unité de pilotage 101 contrôle la vitesse de défilement des bandes de support par le contrôle de la vitesse d'enroulement du rouleau enrouleur moteur 150, et contrôle donc les intervalles de temps séparant l'application de deux opérations consécutive du procédé de fabrication à des emplacements donnés des bandes de support.

Le contrôle des intervalles de temps séparant (i) les expositions de deux couches liquide à des rayonnements initiateur de solidification de ces deux couches et (ii) la mise en contact de ces deux couches permet de s'assurer d'une interface liquide entre ces deux couches lors de leur mise en contact intervenant avant achèvement de leurs solidifications respectives.

En particulier, on peut mettre en oeuvre au cours de l'étape 248, au moyen de l'unité de pilotage 101, les étapes :
- d1) de mise en contact direct de la première couche de séparation (18a) avec la deuxième couche de séparation (18b) et contrôler (248) : un premier intervalle de temps séparant (i) l'exposition de la couche de cathode à l'étape a3) et (ii) le dépôt de la première couche de séparation à l'étape a4), de telle manière que la solidification de la couche de cathode n'est pas achevée au moment du dépôt de la première couche de séparation, et un deuxième intervalle de temps séparant (i) l'exposition de la couche d'anode à l'étape b3) et (ii) le dépôt de la deuxième couche de séparation à l'étape b4) de telle manière que la solidification de la couche d'anode n'est pas achevée au moment du dépôt de la deuxième couche de séparation, un troisième intervalle de temps séparant (i) l'exposition de la première couche de séparation à l'étape a4) et (ii) la mise en contact de l'étape d1) et un quatrième intervalle de temps séparant (i) l'exposition de la deuxième couche de séparation à l'étape b4) et (ii) la mise en contact de l'étape d1), de telle manière que les solidifications respectives des première et deuxième couches de séparation ne sont pas achevée au moment de la mise en contact de l'étape d1) ;
- d2) de mise en contact direct de la première couche de séparation (18a) avec la couche d'anode (16b) et contrôler (248) : un premier intervalle de temps séparant (i) l'exposition de la couche de cathode à l'étape a3) et (ii) le dépôt de la première couche de séparation à l'étape a4), de telle manière que la solidification de la couche de cathode n'est pas achevée au moment du dépôt de la première couche de séparation, un deuxième intervalle de temps séparant (i) l'exposition de la première couche de séparation à l'étape a4) et (ii) la mise en contact de l'étape d2) et un troisième intervalle de temps séparant (i) l'exposition de la couche d'anode à l'étape b3) et (ii) la mise en contact de l'étape d2), de telle manière que la solidification de la première couche de séparation n'est pas achevée au moment de la mise en contact de l'étape d2) ;
- d3) de mise en contact direct de la deuxième couche de séparation (18b) avec la couche de cathode (16a) et contrôler (248) : un premier intervalle de temps séparant (i) l'exposition de la couche d'anode à l'étape b3) et (ii) le dépôt de la deuxième couche de séparation à l'étape b4), de telle manière que la solidification de la couche d'anode n'est pas achevée au moment du dépôt de la deuxième couche de séparation, un deuxième intervalle de temps séparant (i) l'exposition de la deuxième couche de séparation à l'étape b4) et (ii) la mise en contact de l'étape d3) et un troisième intervalle de temps séparant (i) l'exposition de la couche de cathode à l'étape a3) et (ii) la mise en contact de l'étape d3), de telle manière que la solidification de la deuxième couche de séparation n'est pas achevée au moment de la mise en contact de l'étape d3) ; et
- d4) d'enserrage de la troisième couche de séparation (18c) entre la couche de cathode (16a) et la couche d'anode (16b) et de mise en contact de la troisième couche de séparation avec la couche de cathode et la couche d'anode, et contrôler (248) : un premier intervalle de temps séparant (i) l'exposition de la couche de cathode à l'étape a3) et (ii) la mise en contact de l'étape d4), un deuxième intervalle de temps séparant (i) l'exposition de la couche d'anode à l'étape b3) et (ii) la mise en contact de l'étape d4), et un troisième intervalle de temps séparant (i) l'exposition de la troisième couche de séparation à l'étape c4) et (ii) la mise en contact de l'étape d4), de telle manière que les solidifications respectives de la couche de cathode, de la couche d'anode et de la troisième couche de solidification ne sont pas encore achevées au moment de la mise en contact de l'étape d4).

De préférence, l'ensemble de l'équipement de fabrication peut être installé dans un local avec une atmosphère anhydre évitant toute réaction de l'électrolyte encore liquide avec l'humidité de l'air pouvant entrainer une dégradation de la cellule.

Les différents organes décrits en référence à la figure 1 peuvent être regroupés en plusieurs modules indépendants dont le positionnement et l'écartement sur les lignes de fabrication peuvent être au besoin modifiés.

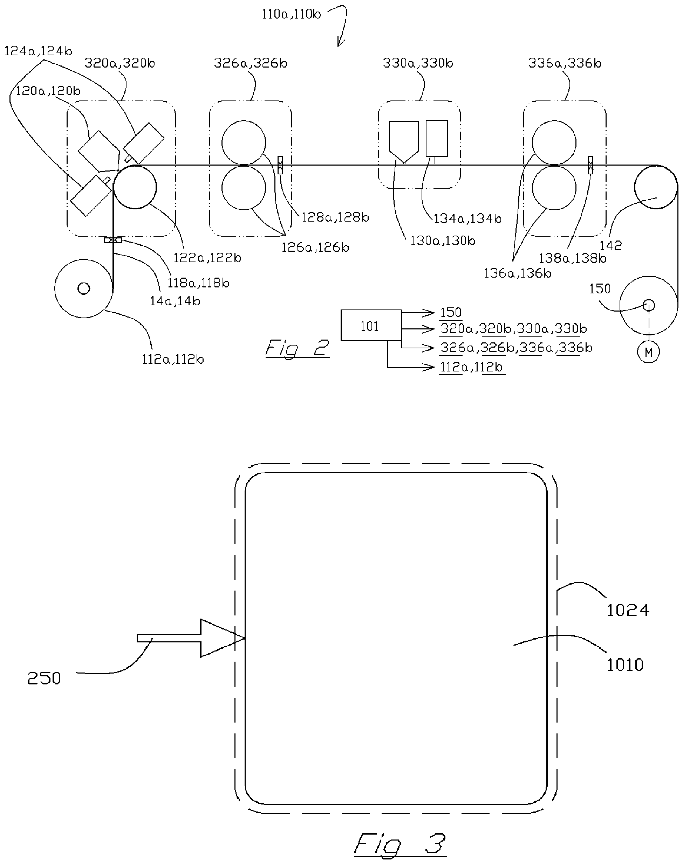

Les modules sont indiqués sur la figure 2 qui représente l'une des lignes de fabrication 110a, 110b correspondant en quelque sorte à une demi-machine de fabrication des demi-cellules. En raison de la symétrie de l'équipement et la grande similitude des deux lignes de fabrication les références des deux-lignes de fabrication 110a, 110b sont indiquées sur la même figure 2. On comprend qu'une ligne de fabrication selon la figure 2 peut être utilisée pour la fabrication de la demi-cellule comprenant une cathode et pour la demi-cellule comprenant une anode.

Entre le rouleau dérouleur 112a, 112b et les rouleaux assembleurs 142, dont un seul est visible sur la figure 2, la bande parcourt plusieurs modules. On trouve dans l'ordre un premier module d'enduction 320a,320b, un premier module de laminage 326a, 326b, un deuxième module d'enduction 330a, 330b et un deuxième module de laminage 336a, 336b. Le premier module d'enduction 320a, 320b comprend la première tête d'enduction 120a ou la deuxième tête d'enduction 120b décrites en référence à la figure 1 ainsi que les sources de rayonnement 124a, 124b qui y sont associées. On peut noter que la source de rayonnement associée à la tête d'enduction du premier module est dédoublée. L'utilisation d'une unique source de rayonnement est également envisageable.

Le deuxième module d'enduction 330a, 330b comprend la troisième tête d'enduction 130a ou la quatrième tête d'enduction 130b décrites en référence à la figure 1 et la source de rayonnement 134a, 134b qui y est associée.

Le premier module de laminage 326a, 326b comprend les rouleaux calibreurs 126a, 126b destinés à fixer l'épaisseur de la couche d'anode ou de la couche de cathode, selon la ligne de fabrication concernée. Le premier module de laminage comprend également un capteur d'épaisseur 128a, 128b en aval des rouleaux calibreurs, pour mesurer l'épaisseur de la demi-cellule en cours de fabrication à la sortie des rouleaux calibreurs.

Le deuxième module de laminage 336a, 336b comprend les rouleaux calibreurs 136a, 136b destinés à fixer l'épaisseur des demi-cellules en cours de fabrication après le dépôt d'une couche d'électrolyte dépourvu de matière active. Le deuxième module de laminage comprend, comme le premier module de laminage un capteur d'épaisseur 138a, 138b en aval des rouleaux calibreurs. Le capteur d'épaisseur permet de mesurer l'épaisseur des demi-cellules juste avant leur assemblage.

Les différents modules 320a, 320b, 326a, 326b, 330a, 330b, 336a, 336b, de même que les rouleaux dérouleurs 112a, 112b et le rouleau enrouleur 150 sont reliés à une unité de pilotage 101, représentée schématiquement, permettant la synchronisation des différents organes.

Comme indiqué précédemment, une mise en oeuvre de l'invention est possible en ne recouvrant que l'une de la couche d'anode et de la couche de cathode d'une couche d'électrolyte dépourvu de matière active. Dans ce cas, l'un des deuxièmes modules d'enduction 330a, 330b et l'un des deuxièmes modules de laminage 336a, 336b peuvent être omis.

Le rouleau enrouleur 150 est un rouleau moteur mu par un moteur M indiqué symboliquement.

Un certain nombre d'organes optionnels décrits en référence sur la figure 1, ne sont pas représentés sur la figure 2 pour des raisons de simplification.

La figure 3, montre une cellule de batterie 1010 formatée. La cellule formatée est obtenue à partir de la cellule 10, en bande, de la figure 1 au terme d'une opération de formatage indiquée symboliquement avec la référence 250. Cette opération comprend notamment, dans l'exemple illustré par la figure 3, le découpage des bords périphériques de la cellule formatée 1010. La cellule est découpée de part en part, c'est-à-dire sur toute l'épaisseur de la cellule, de l'ordre de quelques centaines de micromètres.

Le découpage peut être réalisé avantageusement sur une table de découpage laser. Un découpage par couteaux est également envisageable.

Dans l'exemple illustré par la figure 3, la cellule formatée 1010 se présente avec des faces principales de forme rectangulaire et avec des coins arrondis. Un découpage selon un autre motif, plus complexe est parfaitement possible, ce qui peut améliorer le caractère logeable de la cellule dans l'espace dédié d'un équipement par exemple.

Comme la cellule ne contient pas de matière liquide, et en particulier pas d'électrolyte liquide, l'opération de découpage ne requiert pas de précautions particulières. Les supports conducteurs électriques servant de collecteur de courant restent isolés électriquement, c'est-à-dire isolés à l'encontre d'une conduction par un courant d'électrons, en raison de la présence des couches d'électrolyte solide. A cet égard, le découpage peut être réalisé de préférence après l'achèvement de la solidification des couches.

Dans l'exemple de réalisation de la figure 3, le chant périphérique de la cellule formatée 1010, résultant du découpage, est recouvert d'un revêtement de protection 1024 isolant électrique, par exemple un vernis. Ce vernis peut être renforcé avec des fibres de verre ou du basalte, par exemple. Le revêtement de protection peut être formé de préférence après avoir empilé une pluralité de cellules formatées 1010 identiques de manière à recouvrir les flancs de l'empilement.

La figure 4 montre une partie d'un empilement d'une pluralité de cellules formatées 1011, 1012, 1013, 1014, 1015 identiques à la cellule 1010 visible à la figure 3. Chacune des cellules formatées peut être découpée dans une cellule de batterie 10 en bande telle qu'évoquée en référence avec la figure 1. L'empilement de la figure 4 constitue une batterie d'accumulateurs 1000.

Sur la figure 4 sont indiqués, pour plusieurs cellules formatées, les premier et deuxième supports conducteurs électriques 14a, 14b, la couche de cathode 16a et la couche d'anode 16b, la première couche de séparation 18a, et la deuxième couche de séparation 18b.

Les couches constitutives de chaque cellule formatée sont sensiblement identiques et indiquées avec les mêmes références. On peut toutefois noter que le premier support conducteur électrique 14a de la première cellule formatée 1011 de l'empilement et le deuxième support conducteur électrique 14b de la dernière cellule formatée 1015 de l'empilement sont plus épais que les autres supports conducteurs. Ces supports conducteurs, plus épais, sont formés de plusieurs sous-couches conductrices. Ils présentent une résistance mécanique plus importante, ce qui convient à leur fonction d'enveloppe extérieure de la batterie 1000. Les supports conducteurs plus épais de la première et de la dernière cellule de l'empilement constituent également les bornes de connexion électrique extérieure de la batterie 1000.

Dans l'empilement, les couches de cathode et d'anode, c'est-à-dire les électrodes positives et négatives des différentes cellules formatées, se trouvent alternées. Chaque cellule de l'empilement se trouve ainsi connectée en série avec les autres cellules de l'empilement par l'intermédiaire des supports conducteurs 14a, 14b qui forment ses collecteurs de courant. La tension aux bornes des couches conductrices 14a, 14b des cellules d'extrémité 1011 et 1015 est égale à la somme de la tension des cellules individuelles et correspond à la tension de la batterie 1000.

Il convient de préciser que d'autres interconnexions de cellules formatées sont possibles et en particulier des connexions en parallèle, ou des combinaisons série/parallèle ou parallèle/série. Dans ce cas, des conducteurs électriques supplémentaires peuvent être prévus pour relier les collecteurs de courant des cellules formatées individuelles.

Le mode de réalisation détaillé ci-dessus est de type roll-to-roll, mettant en oeuvre un procédé continu par défilement. Alternativement, il est possible de mettre en oeuvre une fabrication séquentielle par fabrication de plaques individuelles. La manipulation des plaques peut se faire par des méthodes conventionnelles, par exemple par bras robotisés munis de moyens de préhension. Dans ce cas, le contrôle du temps est assuré par le contrôle des instants de manipulation des plaques.

La présente invention ne saurait être limitée au mode de réalisation exposé plus haut, susceptible de subir des modifications sans pour autant sortir du cadre de l'invention.

## Revendications

1. . Procédé de fabrication d'une cellule de stockage d'énergie sous forme électrochimique, comprenant les étapes de :
- former une première demi-cellule (10a), comprenant les étapes a1), a2), a3) suivantes :
a1) fournir (214a) un premier support (14a) conducteur électrique ;
a2) déposer (220a), sur une face du premier support conducteur électrique (14a), une couche de cathode (16a) dans un état pâteux, comprenant une matière active de cathode, des charges conductrices électriques carbonées, un premier mélange électrolyte liquide conducteur d'ions, un premier mélange monomère ou polymère et un premier amorceur de polymérisation ou de réticulation du premier mélange monomère ou polymère ; et
a3) exposer (224a) la couche de cathode dans un état pâteux au moyen d'un premier rayonnement adapté au premier amorceur de polymérisation ou de réticulation du premier mélange monomère, de manière à amorcer une solidification de la couche de cathode (16a) ;
- former une deuxième demi-cellule (10b), comprenant les étapes b1), b2), b3) suivante :
b1) fournir (214b) un deuxième support (14b) conducteur électrique ;
b2) déposer (220b), sur une face du deuxième support conducteur électrique (14b), une couche d'anode (16b) dans un état pâteux, comprenant une matière active d'anode, des charges conductrices électriques carbonées, un deuxième mélange électrolyte liquide conducteur d'ions, un deuxième mélange monomère ou polymère et un deuxième amorceur de polymérisation ou de réticulation du deuxième mélange monomère ou polymère ; et
b3) exposer (224b) la couche d'anode dans un état pâteux au moyen d'un deuxième rayonnement adapté au deuxième amorceur de polymérisation ou de réticulation du deuxième mélange monomère, de manière à amorcer une solidification de la couche d'anode (16b) ;
- mettre en oeuvre au moins l'une des étapes a4), b4 et c4) suivantes :
a4) déposer (230a) et exposer (234a), sur la couche de cathode exposée avant achèvement de la solidification de la couche de cathode exposée, une première couche de séparation (18a) formée d'un premier mélange de séparation dans un état liquide, comprenant un premier mélange électrolyte liquide de séparation conducteur d'ions, un premier mélange monomère ou de polymère de séparation et un premier amorceur de polymérisation ou de réticulation du premier mélange monomère ou polymère de séparation ; et
c4) déposer (230c) et exposer (234c), sur un film grillagé isolant électrique (20), une troisième couche de séparation (18c) formée d'un troisième mélange de séparation dans un état liquide, comprenant un troisième mélange électrolyte liquide de séparation conducteur d'ions, un troisième mélange monomère ou polymère de séparation et un troisième amorceur de polymérisation ou de réticulation du troisième mélange monomère ou polymère de séparation ;
b4) déposer (230b) et exposer (234b), sur la couche d'anode exposée avant achèvement de la solidification de la couche d'anode exposée, une deuxième couche de séparation (18b) formée d'un deuxième mélange de séparation dans un état liquide, comprenant un deuxième mélange électrolyte liquide de séparation conducteur d'ions, un deuxième mélange monomère ou polymère de séparation et un deuxième amorceur de polymérisation ou de réticulation du deuxième mélange monomère ou polymère de séparation ; et
les expositions des étapes a4), b4), et c4) étant mises en oeuvre au moyen de troisième rayonnements, adaptés aux amorceurs de polymérisation ou de réticulation des mélanges monomère ou polymère de séparation respectifs et adaptés à amorcer une solidification des première, deuxième et troisième couches de séparation ;
- assembler (242) la première demi-cellule (10a) et la deuxième demi-cellule (10b) en interposant entre les deux demi-cellules (10a, 10b), au moins l'une des couches de séparations (18a, 18b, 18c) des étapes a4), b4) et c4), l'assemblage comprenant l'une des étapes d1), d2), d3) et d4) suivantes :
d1) mettre en contact direct la première couche de séparation (18a) exposée avec la deuxième couche de séparation (18b) exposée;
d2) mettre en contact direct la première couche de séparation (18a) exposée avec la couche d'anode (16b) exposée;
d3) mettre en contact direct la deuxième couche de séparation (18b) exposée avec la couche de cathode (16a) exposée; et
d4) enserrer la troisième couche de séparation (18c) exposée entre la couche de cathode (16a) exposée et la couche d'anode (16b) exposée, dans lesquelles étapes d1), d2), d3) et d4), les solidifications respectives des couches mises en contact ne sont pas achevées.

2. Procédé selon la revendication 1, comprenant :
- un calibrage (226a, 226b) de l'épaisseur de la couche de cathode (16a), respectivement de la couche d'anode (16b), avant le dépôt (230a) de la première couche de séparation (18a), respectivement avant le dépôt (230b) de la deuxième couche de séparation (18b) et/ou
- un calibrage (236a, 236b) de l'épaisseur de la première couche de séparation (18a), respectivement de la deuxième couche de séparation (18b) avant l'assemblage (242) des demi-cellules (10a, 10b)

3. Procédé selon l'une quelconque des revendications précédentes, dans lequel le premier support (14a) et le deuxième support (14b) sont respectivement une première bande de support et une deuxième bande de support et dans lequel :
la fourniture (214a) du premier support (14a) et la fourniture (214b) du deuxième support (14b) comportent respectivement le déroulement de la première bande de support et le déroulement de la deuxième bande de support respectivement d'un premier rouleau dérouleur (112a) et d'un deuxième rouleau dérouleur (112b).

4. Procédé selon l'une quelconque des revendications précédentes, comprenant les étapes de :
- appliquer un film électriquement isolant (30) sur le premier support ou le deuxième support après assemblage de la première demi-cellule (10a) et la deuxième demi-cellule (10b) ; et
- enrouler, autour d'un rouleau enrouleur (150), la première demi-cellule (10a) et la deuxième demi-cellule (10b) assemblées et le film électriquement isolant (30) appliqué sur le premier support ou le deuxième support.

5. Procédé selon la revendication 3 ou 4, dans lequel le dépôt (220a) de la couche de cathode et le dépôt (220b) de la couche d'anode ont lieu en continu par défilement de la première bande et de la deuxième bande devant respectivement une première tête de dépôt (120a) du premier mélange et une d'une deuxième tête de dépôt (120b) du deuxième mélange.

6. Procédé selon l'une quelconque des revendications 3 à 5, dans lequel :
le dépôt (230a) de la première couche de séparation (18a) et le dépôt (230b) de la deuxième couche de séparation (18b) ont lieu en continu par le défilement de la première bande et de la deuxième bande respectivement devant une troisième tête (130a) de dépôt d'électrolyte et devant une quatrième tête (130b) de dépôt d'électrolyte.

7. Procédé selon l'une quelconque des revendications 3 à 6, dans lequel :
l'exposition (224a) de la couche de cathode (16a), et l'exposition (224b) de la couche d'anode (16b) ont lieu par défilement respectivement de la première bande et de la deuxième bande respectivement devant au moins une première source de rayonnement (124a) et au moins une deuxième source de rayonnement (124b).

8. Procédé selon l'une quelconque des revendications 3 à 7, dans lequel l'exposition (234a) de la première couche de séparation (18a) et l'exposition (234b) de la deuxième couche de séparation (18b) ont lieu par défilement respectivement de la première bande et de la deuxième bande devant une troisième source de rayonnement (134a) et une quatrième source de rayonnement (134b).

9. Procédé selon la revendication 2, dans lequel le premier support et le deuxième support sont respectivement une première bande de support et une deuxième bande de support et dans lequel :
le calibrage (226a) de l'épaisseur de la couche de cathode (16a), respectivement de la couche d'anode (16b), a lieu par passage de la première bande de support, pourvue de la couche de cathode, respectivement de la deuxième bande de support pourvue de la couche d'anode à travers une première paire de rouleaux calibreurs (126a) et une deuxième paire de rouleaux calibreurs (126b).

10. Procédé selon l'une quelconque des revendications 2 et 9, dans lequel le calibrage (236a) de l'épaisseur de la première couche de séparation (18a), respectivement le calibrage (236b) de la deuxième couche de séparation (18b) a lieu par passage de la première demi-cellule (10a), respectivement de la deuxième demi-cellule (10b) à travers une troisième paire de rouleaux calibreurs (136a) et une quatrième paire de rouleaux calibreurs (136b).

11. Procédé selon l'une quelconque des revendications précédentes comprenant la mise en oeuvre des étapes a4) et b4), et comprenant la mise en place d'un film séparateur grillagé isolant électrique (20) entre les couches de séparation (18a, 18b) lors de l'assemblage de la première demi-cellule (10a) et de la deuxième demi-cellule (10b).

12. Procédé selon l'une quelconque des revendications précédentes, comprenant, postérieurement à l'assemblage des demi-cellules, une opération de formatage (250) de la cellule comprenant un découpage de la cellule de batterie en cellules formatées (1010, 1011, 1012, 1013, 1014, 1105).

13. Procédé selon la revendication 12, comprenant la mise en place d'un revêtement (1024) de matériau isolant électrique de protection sur au moins un chant périphérique de la cellule de batterie formatée (1010).

14. Procédé selon l'une quelconque des revendications précédentes, dans lequel le premier mélange électrolyte liquide de la couche de cathode (16a), le deuxième mélange électrolyte liquide de la couche d'anode (16b), le premier mélange électrolyte liquide de la première couche de séparation (18a), le deuxième mélange électrolyte liquide de la deuxième couche de séparation (18b) et le troisième mélange électrolyte liquide de la troisième couche de séparation (18c) sont identiques.

15. Procédé de fabrication d'une batterie comprenant la fabrication d'une pluralité de cellules de batterie (1011, 1012, 1013, 1014, 1015) conformément au procédé de l'une quelconque des revendications 11 et 12, et la formation d'un l'empilement (1000) de cellules de batterie, la formation de l'empilement comprenant la mise en contact d'une face libre conductrice du premier support (14a) d'une cellule de batterie formatée (1011) avec une face libre conductrice du deuxième support (14b) d'une cellule de batterie formatée suivante (1012) de l'empilement (1000).

16. Equipement pour la fabrication d'une cellule de batterie selon l'une quelconque des revendications 1 à 13 comprenant :
- une première ligne de fabrication (110a) pour la fabrication d'une première demi-cellule (10a) ;
- une deuxième ligne de fabrication (110b) pour la fabrication d'une deuxième demi-cellules (10b) ;
- une paire de rouleaux d'assemblage (142) pour l'assemblage d'une première demi-cellule (10a) formée sur la première ligne de fabrication (110a) et d'une deuxième demi-cellule (10b) formée sur la deuxième ligne de fabrication (110b) ;
- un rouleau enrouleur (150) de cellule de batterie disposé en aval de la paire de rouleaux d'assemblage (142) ;
dans lequel au moins l'une de la première ligne de fabrication (110a) et de la deuxième ligne de fabrication (110b) comprend :
- un rouleau dérouleur (112a, 112b) pour un déroulement d'une bande de support (14a, 14b) ; et, dans l'ordre entre le rouleau dérouleur et la paire de rouleaux d'assemblage (142) :
- un premier module d'enduction (320a, 320b) pour une formation d'une couche de cathode, respectivement d'une couche d'anode ;
- un premier module de laminage (326a, 326b) ;
- un deuxième module d'enduction (330a, 330b) pour une formation d'une couche de séparation (18a, 18b) ; et
- un deuxième module de laminage (336a, 336b),
dans lequel le premier et le deuxième module de laminage comprennent respectivement une paire de rouleaux calibreurs (126a, 126b, 136a, 136b) et un capteur d'épaisseur (128a, 128b, 138a, 138b) associés respectivement à la paire de rouleaux calibreurs, et
dans lequel le premier module d'enduction et le deuxième module d'enduction comprennent respectivement une tête de dépôt (120a, 120b, 130a, 130b) et au moins une source de rayonnement (124a, 124b, 134a, 134b) associée à la tête de dépôt.

17. Equipement selon la revendication 16, dans lequel le rouleau enrouleur (150) est un rouleau moteur.

18. Equipement selon la revendication 16, dans lequel le rouleau dérouleur (112a, 112b) est un rouleau freiné.

19. Equipement selon la revendication 16, dans lequel la tête de dépôt (120a) du premier module d'enduction (320a) est une tête de dépôt (120a) de couche de cathode, la tête de dépôt (120b) du deuxième module d'enduction (320b) est une tête de dépôt de couche d'anode, et au moins une source de rayonnement (124a) est associée à la tête de dépôt (120a) de couche de cathode et au moins une source de rayonnement (124b) est associée à la tête de dépôt (120b) de couche d'anode.

20. Equipement selon l'une quelconque des revendications 16 à 19, comprenant une unité de pilotage (101) d'au moins l'un parmi le rouleau enrouleur (150), le premier module d'enduction (320a, 320b), le deuxième module d'enduction (330a, 330b), le premier module de laminage (326a, 326b) et le deuxième module de laminage (336a, 336b).

## Patentansprüche

1. Verfahren zur Herstellung einer Zelle zur Speicherung von Energie in elektrochemischer Form, die Schritte umfassend zum:
- Bilden einer ersten Halbzelle (10a), die folgenden Schritte a1), a2), a3) umfassend:
a1) Bereitstellen (214a) eines ersten elektrisch leitfähigen Trägers (14a);
a2) Abscheiden (220a), auf einer Seite des ersten elektrisch leitfähigen Trägers (14a), einer Kathodenschicht (16a) in einem pastösen Zustand, ein aktives Kathodenmaterial umfassend, kohlenstoffhaltige elektrisch leitfähige Ladungen, eine erstes flüssiges ionenleitendes Elektrolytgemenge, ein erstes Monomer- oder Polymergemenge und einen ersten Polymerisations- oder Vernetzungsinitiator des ersten Monomer- oder Polymergemenges; und
a3) Exponieren (224a) der Kathodenschicht in einem pastösen Zustand mittels einer ersten Strahlung, die an den ersten Polymerisations- oder Vernetzungsinitiator des ersten Monomergemenges angepasst ist, um eine Erstarrung der Kathodenschicht (16a) zu initiieren;
- Bilden einer zweiten Halbzelle (10b), die folgenden Schritten b1), b2), b3) umfassend:
b1) Bereitstellen (214b) eines zweiten elektrisch leitfähigen Trägers (14b);
b2) Abscheiden (220b), auf einer Seite des zweiten elektrisch leitfähigen Trägers (14b), einer Anodenschicht (16b) in einem pastösen Zustand, ein aktives Anodenmaterial umfassend, kohlenstoffhaltige elektrisch leitfähige Ladungen, ein zweites flüssiges ionenleitendes Elektrolytgemenge, ein zweites Monomer- oder Polymergemenge und einen zweiten Polymerisations- oder Vernetzungsinitiator des zweiten Monomer- oder Polymergemenges; und
b3) Exponieren (224b) der Anodenschicht in einem pastösen Zustand mittels einer zweiten Strahlung, die an den zweiten Polymerisations- oder Vernetzungsinitiator des zweiten Monomergemenges angepasst ist, um eine Erstarrung der Anodenschicht (16b) zu initiieren;
- Durchführen mindestens einer der folgenden Schritte a4), b4) und c4):
a4) Abscheiden (230a) und Exponieren (234a), auf der exponierten Kathodenschicht vor Abschluss der Erstarrung der exponierten Kathodenschicht, einer ersten Trennschicht (18a), die aus einem ersten Trenngemenge in einem flüssigen Zustand gebildet ist, ein erstes flüssiges ionenleitendes Trennungs-Elektrolytgemenge umfassend, ein erstes Trennungs-Monomer- oder - Polymergemenge und einen ersten Polymerisations- oder Vernetzungsinitiator des ersten Trennungs-Monomer- oder -Polymergemenges; und
c4) Abscheiden (230c) und Exponieren (234c), auf einer elektrisch isolierenden Gewebefolie (20), einer dritten Trennschicht (18c), die aus einem dritten Trenngemenge in einem flüssigen Zustand gebildet ist, ein drittes flüssiges ionenleitendes Trennungs-Elektrolytgemenge umfassend, ein drittes Trennungs-Monomer- oder -Polymergemenge und einen dritten Polymerisations- oder Vernetzungsinitiator des dritten Trennungs-Monomer- oder -Polymergemenges;
b4) Abscheiden (230b) und Exponieren (234b), auf der exponierten Anodenschicht vor Abschluss der Erstarrung der exponierten Anodenschicht, einer zweiten Trennschicht (18b), die aus einem zweiten Trenngemenge in einem flüssigen Zustand gebildet ist, ein zweites flüssiges ionenleitendes Trennungs-Elektrolytgemenge umfassend, ein zweites Trennungs-Monomer- oder - Polymergemenge und einen zweiten Polymerisations- oder Vernetzungsinitiator des zweiten Trennungs-Monomer- oder -Polymergemenges; und
wobei die Exponierungen der Schritte a4), b4) und c4) mittels der dritten Strahlungen durchgeführt werden, die für die Polymerisations- oder Vernetzungsinitiatoren der jeweiligen Trennungs-Monomer- oder -Polymergemenge angepasst sind, und zur Initiierung einer Erstarrung der ersten, zweiten und dritten Trennschicht angepasst sind;
- Verbinden (242) der ersten Halbzelle (10a) und der zweiten Halbzelle (10b) durch Zwischensetzen zwischen den zwei Halbzellen (10a, 10b) mindestens einer der Trennschichten (18a, 18b, 18c) der Schritte a4), b4) und c4), wobei das Verbinden einen der folgenden Schritte d1), d2), d3) und d4) umfasst:
d1) in direkten Kontakt bringen der erste exponierten Trennschicht (18a) mit der zweiten exponierten Trennschicht (18b);
d2) in direkten Kontakt bringen der ersten exponierten Trennschicht (18a) mit der exponierten Anodenschicht (16b);
d3) in direkten Kontakt bringen der zweiten exponierten Trennschicht (18b) mit der exponierten Kathodenschicht (16a); und
d4) Einschließen der dritten exponierten Trennschicht (18c) zwischen der exponierten Kathodenschicht (16a) und der exponierten Anodenschicht (16b), wobei in den Schritten d1), d2), d3) und d4) die jeweiligen Erstarrungen der in Kontakt gebrachten Schichten nicht abgeschlossen werden.

2. Verfahren nach Anspruch 1, umfassend:
- eine Kalibrierung (226a, 226b) der Dicke der Kathodenschicht (16a) beziehungsweise der Anodenschicht (16b) vor der Abscheidung (230a) der ersten Trennschicht (18a) beziehungsweise vor der Abscheidung (230b) der zweiten Trennschicht (18b); und/oder
- eine Kalibrierung (236a, 236b) der Dicke der ersten Trennschicht (18a) beziehungsweise der zweiten Trennschicht (18b) vor dem Verbinden (242) der Halbzellen (10a, 10b).

3. Verfahren nach einem der vorhergehenden Ansprüche, wobei der erste Träger (14a) und der zweite Träger (14b) jeweils ein erster Trägerstreifen und ein zweiter Trägerstreifen sind, und wobei:
die Bereitstellung (214a) des ersten Trägers (14a) und die Bereitstellung (214b) des zweiten Trägers (14b) das Abwickeln des ersten Trägerstreifen beziehungsweise das Abwickeln des zweiten Trägerstreifens von einer ersten Abwickelwalze (112a) beziehungsweise einer zweiten Abwickelwalze (112b) umfasst.

4. Verfahren nach einem der vorhergehenden Ansprüche, die Schritte umfassend zum:
- Applizieren einer elektrisch isolierenden Folie (30) auf den ersten Träger oder den zweiten Träger nach dem Verbinden der ersten Halbzelle (10a) und der zweiten Halbzelle (10b); und
- Aufwickeln, auf eine Aufwickelwalze (150), der verbundenen ersten Halbzelle (10a) und zweiten Halbzelle (10b), und der elektrisch isolierenden Folie (30), die auf den ersten Träger oder den zweiten Träger appliziert ist.

5. Verfahren nach Anspruch 3 oder 4, wobei die Abscheidung (220a) der Kathodenschicht und die Abscheidung (220b) der Anodenschicht kontinuierlich durch Vorbeilaufen des ersten Streifens und des zweiten Streifens vor jeweils einem ersten Abscheidungskopf (120a) des ersten Gemenges und einem zweiten Abscheidungskopf (120b) des zweiten Gemenges erfolgen.

6. Verfahren nach einem der Ansprüche 3 bis 5, wobei:
die Abscheidung (230a) der ersten Trennschicht (18a) und die Abscheidung (230b) der zweiten Trennschicht (18b) kontinuierlich durch Vorbeilaufen des ersten Streifens und des zweiten Streifens vor einem dritten Abscheidungskopf (130a) von Elektrolyt beziehungsweise vor einem vierten Abscheidungskopf (130b) von Elektrolyt erfolgen.

7. Verfahren nach einem der Ansprüche 3 bis 6, wobei:
die Exponierung (224a) der Kathodenschicht (16a) und die Exponierung (224b) der Anodenschicht (16b) durch Vorbeilaufen des ersten Streifens beziehungsweise des zweiten Streifens vor jeweils mindestens einer ersten Strahlungsquelle (124a) und mindestens einer zweiten Strahlungsquelle (124b) erfolgen.

8. Verfahren nach einem der Ansprüche 3 bis 7, wobei die Exponierung (234a) der ersten Trennschicht (18a) und die Exponierung (234b) der zweiten Trennschicht (18b) durch Vorbeilaufen des ersten Streifens beziehungsweise des zweiten Streifens vor einer dritten Strahlungsquelle (134a) und einer vierten Strahlungsquelle (134b) erfolgen.

9. Verfahren nach Anspruch 2, wobei der erste Träger und der zweite Träger jeweils ein erster Trägerstreifen und ein zweiter Trägerstreifen sind, und wobei:
die Kalibrierung (226a) der Dicke der Kathodenschicht (16a) beziehungsweise der Anodenschicht (16b) durch Durchlaufen des ersten Trägerstreifens, der mit der Kathodenschicht versehen ist, beziehungsweise des zweiten Trägerstreifens, der mit der Anodenschicht versehen ist, durch ein erstes Paar von Kalibrierwalzen (126a) und ein zweites Paar von Kalibrierwalzen (126b) erfolgt.

10. Verfahren nach einem der Ansprüche 2 und 9, wobei die Kalibrierung (236a) der Dicke der ersten Trennschicht (18a) beziehungsweise die Kalibrierung (236b) der zweiten Trennschicht (18b) durch Durchlaufen der ersten Halbzelle (10a) beziehungsweise der zweiten Halbzelle (10b) durch ein drittes Paar von Kalibrierwalzen (136a) und ein viertes Paar von Kalibrierwalzen (136b) erfolgt.

11. Verfahren nach einem der vorhergehenden Ansprüche, die Durchführung der Schritte a4) und b4) umfassend, und das Anbringen einer elektrisch isolierenden Gewebetrennfolie (20) zwischen den Trennschichten (18a, 18b) während dem Verbinden der ersten Halbzelle (10a) und der zweiten Halbzelle (10b) umfassend.

12. Verfahren nach einem der vorhergehenden Ansprüche, umfassend, nach dem Verbinden der Halbzellen, einen Vorgang zum Formatieren (250) der Zelle, der ein Zuschneiden der Batteriezelle in formatierte Zellen (1010, 1011, 1012, 1013, 1014, 1105) umfasst.

13. Verfahren nach Anspruch 12, das Anbringen einer Beschichtung (1024) aus schützendem elektrisch isolierendem Material an mindestens einer peripheren Kante der formatierten Batteriezelle (1010) umfassend.

14. Verfahren nach einem der vorhergehenden Ansprüche, wobei das erste flüssige Elektrolytgemenge der Kathodenschicht (16a), das zweite flüssige Elektrolytgemenge der Anodenschicht (16b), das erste flüssige Elektrolytgemenge der ersten Trennschicht (18a), das zweite flüssige Elektrolytgemenge der zweiten Trennschicht (18b) und das dritte flüssige Elektrolytgemenge der dritten Trennschicht (18c) identisch sind.

15. Verfahren zur Herstellung einer Batterie, die Herstellung einer Vielzahl von Batteriezellen (1011, 1012, 1013, 1014, 1015) gemäß dem Verfahren nach einem der Ansprüche 11 und 12 umfassend und die Bildung eines Stapels (1000) von Batteriezellen, wobei die Bildung des Stapels das In-Kontakt-Bringen einer freien leitfähigen Seite des ersten Trägers (14a) einer formatierten Batteriezelle (1011) mit einer freien leitfähigen Seite des zweiten Trägers (14b) einer folgenden formatierten Batteriezelle (1012) des Stapels (1000) umfasst.

16. Anlage zur Herstellung einer Batteriezelle nach einem der Ansprüche 1 bis 13, umfassend:
- eine erste Herstellungslinie (110a) zur Herstellung einer ersten Halbzelle (10a);
- eine zweite Herstellungslinie (110b) zur Herstellung einer zweiten Halbzelle (10b);
- ein Paar von Verbindungswalzen (142) zum Verbinden einer ersten Halbzelle (10a), die auf der ersten Herstellungslinie (110a) gebildet wird, und einer zweiten Halbzelle (10b), die auf der zweiten Herstellungslinie (110b) gebildet wird;
- eine Aufwickelwalze (150) für Batteriezellen, die stromabwärts des Paares von Verbindungswalzen (142) angeordnet ist;
wobei mindestens eine der ersten Herstellungslinie (110a) und der zweiten Herstellungslinie (110b) umfasst:
- eine Abwickelwalze (112a, 112b) zum Abwickeln eines Trägerstreifens (14a, 14b); und in der Reihenfolge zwischen der Abwickelwalze und dem Paar von Verbindungswalzen (142);
- ein erstes Beschichtungsmodul (320a, 320b) zur Bildung einer Kathodenschicht beziehungsweise einer Anodenschicht;
- ein erstes Laminierungsmodul (326a, 326b);
- ein zweites Beschichtungsmodul (330a, 330b) zum Bilden einer Trennschicht (18a, 18b); und
- ein zweites Laminierungsmodul (336a, 336b),
wobei das erste und das zweite Laminierungsmodul jeweils ein Paar von Kalibrierwalzen (126a, 126b, 136a, 136b) umfassen und einen Dickensensor (128a, 128b, 138a, 138b), der jeweils dem Paar von Kalibrierwalzen zugeordnet ist, und
wobei das erste Beschichtungsmodul und das zweite Beschichtungsmodul jeweils einen Abscheidungskopf (120a, 120b, 130a, 130b) umfassen und mindestens eine Strahlungsquelle (124a, 124b, 134a, 134b), die dem Abscheidungskopf zugeordnet ist.

17. Anlage nach Anspruch 16, wobei die Aufwickelwalze (150) eine Motorwalze ist.

18. Anlage nach Anspruch 16, wobei die Abwickelwalze (112a, 112b) eine gebremste Walze ist.

19. Anlage nach Anspruch 16, wobei der Abscheidungskopf (120a) des ersten Beschichtungsmoduls (320a) ein Abscheidungskopf (120a) mit Kathodenschicht ist, der Abscheidungskopf (120b) des zweiten Beschichtungsmoduls (320b) ein Abscheidungskopf mit Anodenschicht ist, und mindestens eine Strahlungsquelle (124a) dem Abscheidungskopf (120a) mit Kathodenschicht zugeordnet ist und mindestens eine Strahlungsquelle (124b) dem Abscheidungskopf (120b) mit Anodenschicht zugeordnet ist.

20. Anlage nach einem der Ansprüche 16 bis 19, eine Steuereinheit (101) umfassend von mindestens einem unter der Aufwickelwalze (150), dem ersten Beschichtungsmodul (320a, 320b), dem zweiten Beschichtungsmodul (330a, 330b), dem ersten Laminierungsmodul (326a, 326b) und dem zweiten Laminierungsmodul (336a, 336b).

## Claims

1. A method for manufacturing an energy storage cell in electrochemical form, comprising the steps of:
- forming a first half-cell (10a), comprising the following steps a1), a2), a3):
a1) providing (214a) a first electrically conductive support (14a);
a2) depositing (220a), on one face of the first electrically conductive support (14a), a cathode layer (16a) in a pasty state, comprising an active cathode material, electrically conductive carbon charges, a first ion conductive liquid electrolyte mixture, a first monomer or polymer mixture and a first initiator of the polymerisation or crosslinking of the first monomer or polymer mixture; and
a3) exposing (224a) the cathode layer in a pasty state by means of a first radiation adapted to the first initiator of the polymerisation or crosslinking of the first monomer mixture, so as to initiate solidification of the cathode layer (16a);
- forming a second half-cell (10b), comprising the following steps b1), b2), b3):
b1) providing (214b) a second electrically conductive support (14b);
b2) depositing (220b), on one face of the second electrically conductive support (14b), an anode layer (16b) in a pasty state, comprising an active anode material, electrically conductive carbon charges, a second ion conductive liquid electrolyte mixture, a second monomer or polymer mixture and a second initiator of the polymerisation or crosslinking of the second monomer or polymer mixture; and
b3) exposing (224b) the anode layer in a pasty state by means of a second radiation adapted to the second initiator of the polymerisation or crosslinking of the second monomer mixture, so as to initiate solidification of the anode layer (16b);
- implementing at least one of the following steps a4), b4 and c4):
a4) depositing (230a) and exposing (234a), on the exposed cathode layer before completion of the solidification of the exposed cathode layer, a first separation layer (18a) formed of a first separation mixture in a liquid state, comprising a first ion conductive separation liquid electrolyte mixture, a first separation monomer or polymer mixture and a first initiator of the polymerisation or crosslinking of the first separation monomer or polymer mixture; and
c4) depositing (230c) and exposing (234c), on an electrically insulating mesh film (20), a third separation layer (18c) formed of a third separation mixture in a liquid state, comprising a third ion conductive separation liquid electrolyte mixture, a third separation monomer or polymer mixture and a third initiator of the polymerisation or crosslinking of the third separation monomer or polymer mixture;
b4) depositing (230b) and exposing (234b), on the exposed anode layer before completion of the solidification of the exposed anode layer, a second separation layer (18b) formed of a second separation mixture in a liquid state, comprising a second ion conductive separation liquid electrolyte mixture, a second separation monomer or polymer mixture and a second initiator of the polymerisation or crosslinking of the second separation monomer or polymer mixture; and
the exposures of steps a4), b4), and c4) being implemented by means of third radiation, adapted to initiators of the polymerisation or crosslinking of the respective separation monomer or polymer mixtures and adapted to initiate a solidification of the first, second and third separation layers;
- assembling (242) the first half-cell (10a) and the second half-cell (10b) by interposing between the two half-cells (10a, 10b), at least one of the separation layers (18a, 18b, 18c) of steps a4), b4) and c4), the assembly comprising one of the following steps d1), d2), d3) and d4):
d1) directly contacting the exposed first separation layer (18a) with the exposed second separation layer (18b);
d2) directly contacting the exposed first separation layer (18a) with the exposed anode layer (16b);
d3) directly contacting the exposed second separation layer (18b) with the exposed cathode layer (16a); and
d4) sandwiching the third exposed separation layer (18c) between the exposed cathode layer (16a) and the exposed anode layer (16b), wherein steps d1), d2), d3) and d4), the respective solidifications of the contacted layers are not completed.

2. The method according to claim 1, comprising:
- a calibration (226a, 226b) of the thickness of the cathode layer (16a), respectively of the anode layer (16b), before the deposition (230a) of the first separation layer (18a), respectively before the deposition (230b) of the second separation layer (18b) and/or
- a calibration (236a, 236b) of the thickness of the first separation layer (18a), respectively of the second separation layer (18b) before the assembly (242) of the half-cells (10a, 10b).

3. The method according to any one of the preceding claims, wherein the first support (14a) and the second support (14b) are respectively a first support strip and a second support strip and wherein:
the supply (214a) of the first support (14a) and the supply (214b) of the second support (14b) respectively include the unwinding of the first support strip and the unwinding of the second support strip respectively of a first unwinding roller (112a) and a second unwinding roller (112b).

4. The method according to any one of the preceding claims, comprising the steps of:
- applying an electrically insulating film (30) to the first support or the second support after assembly of the first half-cell (10a) and the second half-cell (10b); and
- winding, around a winding roller (150), the assembled first half-cell (10a) and second half-cell (10b) and the electrically insulating film (30) applied to the first support or the second support.

5. The method according to claim 3 or 4, wherein the deposition (220a) of the cathode layer and the deposition (220b) of the anode layer take place continuously by running the first strip and the second strip in front of respectively a first head (120a) for the deposition of the first mixture and a second head (120b) for the deposition of the second mixture.

6. The method according to any one of claims 3 to 5, wherein:
the deposition (230a) of the first separation layer (18a) and the deposition (230b) of the second separation layer (18b) take place continuously by running the first strip and the second strip respectively in front of a third head (130a) for the deposition of electrolyte and in front of a fourth head (130b) for the deposition of electrolyte.

7. The method according to any one of claims 3 to 6, wherein:
the exposure (224a) of the cathode layer (16a), and the exposure (224b) of the anode layer (16b) take place by running respectively of the first strip and the second strip respectively in front of at least one first radiation source (124a) and at least one second radiation source (124b).

8. The method according to any one of claims 3 to 7, wherein the exposure (234a) of the first separation layer (18a) and the exposure (234b) of the second separation layer (18b) take place by running respectively of the first strip and the second strip in front of a third radiation source (134a) and a fourth radiation source (134b).

9. The method according to claim 2, wherein the first support and the second support are respectively a first support strip and a second support strip and wherein:
the calibration (226a) of the thickness of the cathode layer (16a), respectively of the anode layer (16b), takes place by passing the first support strip, provided with the cathode layer, respectively the second support strip provided with the anode layer through a first pair of calibration rollers (126a) and a second pair of calibration rollers (126b).

10. The method according to any one of claims 2 and 9, wherein the calibration (236a) of the thickness of the first separation layer (18a), respectively the calibration (236b) of the second separation layer (18b) takes place by passing the first half-cell (10a), respectively the second half-cell (10b) through a third pair of calibration rollers (136a) and a fourth pair of calibration rollers (136b).

11. The method according to any one of the preceding claims comprising the implementation of steps a4) and b4), and comprising the establishment of an electrically insulating mesh separator film (20) between the separation layers (18a, 18b) during the assembly of the first half-cell (10a) and the second half-cell (10b).

12. The method according to any one of the preceding claims, comprising, subsequently to the assembly of the half-cells, an operation (250) of formatting the cell comprising cutting the battery cell into formatted cells (1010, 1011, 1012, 1013, 1014, 1105).

13. The method according to claim 12, comprising placing a coating (1024) of protective electrically insulating material on at least one peripheral edge of the formatted battery cell (1010).

14. The method according to any one of the preceding claims, wherein the first liquid electrolyte mixture of the cathode layer (16a), the second liquid electrolyte mixture of the anode layer (16b), the first liquid electrolyte mixture of the first separation layer (18a), the second liquid electrolyte mixture of the second separation layer (18b) and the third liquid electrolyte mixture of the third separation layer (18c) are identical.

15. A method for manufacturing a battery comprising manufacturing a plurality of battery cells (1011, 1012, 1013, 1014, 1015) in accordance with the method of any one of claims 11 and 12, and forming a stack (1000) of battery cells, forming the stack comprising contacting a conductive free face of the first support (14a) of a formatted battery cell (1011) with a conductive free face of the second support (14b) of a next formatted battery cell (1012) of the stack (1000).

16. An equipment for manufacturing a battery cell according to any one of claims 1 to 13 comprising:
- a first manufacturing line (110a) for manufacturing a first half-cell (10a);
- a second manufacturing line (110b) for manufacturing a second half-cell (10b);
- a pair of assembly rollers (142) for assembling a first half-cell (10a) formed on the first manufacturing line (110a) and a second half-cell (10b) formed on the second manufacturing line (110b);
- a battery cell winding roller (150) disposed downstream of the pair of assembly rollers (142);
wherein at least one of the first manufacturing line (110a) and the second manufacturing line (110b) comprises:
- an unwinding roller (112a, 112b) for unwinding a support strip (14a, 14b); and, in order between the unwinding roller and the pair of assembly rollers (142):
- a first coating module (320a, 320b) for forming a cathode layer, respectively an anode layer;
- a first rolling module (326a, 326b);
- a second coating module (330a, 330b) for forming a separation layer (18a, 18b); and
- a second rolling module (336a, 336b),
wherein the first and the second rolling module respectively comprise a pair of calibration rollers (126a, 126b, 136a, 136b) and a thickness sensor (128a, 128b, 138a, 138b) associated respectively with the pair of calibration rollers, and
wherein the first coating module and the second coating module respectively comprise a deposition head (120a, 120b, 130a, 130b) and at least one radiation source (124a, 124b, 134a, 134b) associated with the deposition head.

17. The equipment according to claim 16, wherein the winding roller (150) is a motor roller.

18. The equipment according to claim 16, wherein the unwinding roller (112a, 112b) is a braked roller.

19. The equipment according to claim 16, wherein the deposition head (120a) of the first coating module (320a) is a cathode layer deposition head (120a), the deposition head (120b) of the second coating module (320b) is an anode layer deposition head, and at least one radiation source (124a) is associated with the cathode layer deposition head (120a) and at least one radiation source (124b) is associated with the anode layer deposition head (120b).

20. The equipment according to any one of claims 16 to 19, comprising a control unit (101) of at least one of the winding roller (150), the first coating module (320a, 320b), the second coating module (330a, 330b), the first rolling module (326a, 326b) and the second rolling module (336a, 336b).
